(19) Europäisches Patentamt / European Patent Office / Office européen des brevets

(11) **EP 4 365 633 A1**

(12) **EUROPEAN PATENT APPLICATION**
published in accordance with Art. 153(4) EPC

(43) Date of publication:
**08.05.2024   Bulletin 2024/19**

(21) Application number: **22833419.9**

(22) Date of filing: **31.05.2022**

(51) International Patent Classification (IPC):
*G01S 17/08* (2006.01)     *G01S 7/48* (2006.01)
*G01S 7/51* (2006.01)      *G01S 17/87* (2020.01)
*G08B 21/18* (2006.01)     *G01S 7/481* (2006.01)
*G01B 11/02* (2006.01)     *H01S 3/00* (2006.01)

(52) Cooperative Patent Classification (CPC):
**G01B 11/02; G01S 7/48; G01S 7/481; G01S 7/51;
G01S 17/08; G01S 17/87; G08B 21/18; H01S 3/00**

(86) International application number:
**PCT/KR2022/007738**

(87) International publication number:
**WO 2023/277363 (05.01.2023 Gazette 2023/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.06.2021   KR 20210086062**
**18.08.2021   KR 20210108941**

(71) Applicant: **Magpie Tech Inc.
Seoul 04211 (KR)**

(72) Inventor: **SHIN, Ungchul
Incheon 21508 (KR)**

(74) Representative: **Betten & Resch
Patent- und Rechtsanwälte PartGmbB
Maximiliansplatz 14
80333 München (DE)**

(54) **LASER RANGE FINDING APPARATUS, FINDING DEVICE, STORAGE MEDIUM FOR STORING INSTRUCTION FOR FINDING, AND LASER RANGE FINDING SYSTEM**

(57)     A device according to embodiments may calculate a measurement value according to a measurement mode on the basis of the inclination of a laser range finding apparatus. A storage medium according to embodiments stores at least one program configured to be executed by one or more processors of a finding device which is communicable with a laser range finding apparatus and includes a display, the program calculating a measurement value according to a measurement mode on the basis of the inclination of the laser range finding apparatus. A laser range finding apparatus according to the embodiments may calculate the distance between the laser range finding apparatus and at least one object on the basis of the inclination of the laser range finding apparatus.

FIG. 1

## Description

[Technical Field]

Tape measures have been widely used to measure distances throughout industries such as industrial sites, construction sites, and interior design, as well as in everyday life. It is difficult to measure a large volume object or a tall object or place using a tape measure alone, and due to the nature of a tape material, the tape measure easily bends, making it difficult to measure a straight-line distance between two objects. Therefore, a laser range finder (LRF) has been developed and used to find a distance to a target after calculating the distance to the target by using a laser beam (or laser) to count a time taken until the laser beam is reflected by the target and returns.

[Background Art]

The LRF includes a laser transmitter configured to emit a laser beam and a laser receiver configured to receive the laser beam that is reflected by the target and returns. The LRF may output a laser beam to measure a time taken until the laser beam is reflected by the target and received, and calculate a distance between the LRF and the target object based on the measured time.

[Disclosure]

[Technical Problem]

However, the conventional LRF is only used to measure a horizontal distance or vertical distance by transmitting a single laser beam, or cannot accurately measure a distance unless one or more targets are present on a horizontal or vertical extension line. Therefore, a laser range finding apparatus according to embodiments includes a first laser transmitter and a second laser transmitter configured to emit laser beams in opposite directions to simultaneously measure a distance between two objects. The first laser transmitter transmits a first laser beam to a first object, and the second laser transmitter transmits a second laser beam to a second object located in a direction directly opposite to the first object. The laser range finding apparatus according to the embodiments includes a first laser receiver configured to receive a first laser beam reflected from a first object and a second laser receiver configured to receive a second laser beam reflected from a second object. The laser range finding apparatus according to the embodiments may measure a time taken until the first laser beam and the second laser beam are received, calculate a distance between the first object and the laser range finding apparatus (for example, a first distance) and a distance between the second object and the laser range finding apparatus (for example, a second distance), and calculate a distance between the first object and the second object based on the calculated distances.

The laser range finding apparatus according to the embodiments may be configured as a handheld device that allows a user to measure a distance by holding the device with a hand without any special equipment. A conventional handheld laser range finding apparatus has not been able to measure an accurate distance since the apparatus could not be leveled depending on the user skill level. The laser range finding apparatus according to the embodiments may provide an auto measuring function to level the apparatus and measure a distance regardless of user skill level.

[Technical Solution]

Therefore, a measurement device capable of communicating with a laser range finding apparatus according to the embodiments includes a display unit, one or more processors, and a memory. The memory according to the embodiments includes at least one program executed by the one or more processors, and the at least one program includes one or more instructions. The one or more instructions according to the embodiments are configured to display, on the display unit, alarm information indicating that an inclination of the laser range finding apparatus is less than a preset value when the inclination of the laser range finding apparatus is less than the preset value, display a user interface for operation of the laser range finding apparatus on the display unit, and select any one of a plurality of measurement modes including a one-way range finding mode, a two-way range finding mode, an area measurement mode, and a volume measurement mode, and calculate a value according to the selected measurement mode based on a distance between the laser range finding apparatus and at least one object measured based on a time at which an output laser beam is received or a phase thereof and the inclination of the laser range finding apparatus according to a signal input by a user to command output of the laser beam from at least one of a first laser module or a second laser module included in the laser range finding apparatus according to the selected measurement mode.

There is provided a recording medium storing at least one program configured to be executed by one or more processors of a measurement device allowed to communicate with a laser range finding apparatus and including a display unit according to the embodiment, the at least one program including one or more instructions configured to display, on the display unit, alarm information indicating that an inclination of the laser range finding apparatus is less than a preset value when the inclination of the laser range finding apparatus is less than the preset value, display a user interface for operation of the laser range finding apparatus on the display unit, and select any one of a plurality of measurement modes including a one-way range finding mode, a two-way range finding mode, an area measurement mode, and a volume measurement mode, and calculate a value according to the selected measurement mode based on a distance between the laser range finding apparatus and at least one object measured based on a time at which an output laser beam is received or a phase thereof and the inclination of the laser range finding apparatus according to a signal input by a user to command output of the laser beam from at least one of a first laser module or a second laser module included in the laser range finding apparatus according to the selected measurement mode.

A laser range finding apparatus according to the embodiments includes a body, a first laser module and a second laser module located at both ends along a vertical axis of the body, a sensor unit included in the body, a display unit located on a surface of the body, and a controller included in the body. The first laser module according to the embodiments outputs a first laser beam, the second laser module outputs a second laser beam in a direction opposite to the first laser module, the sensor unit secures an inclination of the laser range finding apparatus, and the controller determines whether the secured inclination is less than a preset value, generates an alarm indicating that the secured inclination is less than the preset value, performs a control operation so that a laser beam is output from at least one of the first laser module or the second laser module, and calculates a distance between the laser range finding apparatus and at least one object based on a time at which the output laser beam is received or a phase change of the output laser beam and the secured inclination.

[Advantageous effects]

The laser range finding apparatus according to the embodiments may be configured in a handheld form to increase user convenience.

The laser range finding apparatus according to the embodiments may calculate an accurate distance regardless of user skill level.

The laser range finding apparatus according to the embodiments may increase user convenience by performing accurate range finding and various measurements and calculations of an area and volume, with minimal measurement, regardless of a user location.

Since the laser range finding apparatus system according to embodiments includes a variety of measurement devices capable of communicating with the laser range finding apparatus, a function and an operation of the laser range finding apparatus may be remotely controlled, and thus it is possible to increase user convenience.

[Description of Drawings]

The drawings are included to further understand the embodiments, and the drawings represent the embodiments along with descriptions related to the embodiments. For a better understanding of the various embodiments described below, reference should be made to the following description of the embodiments in conjunction with the following drawings, in which like reference numerals refer to corresponding parts throughout the drawings.

FIG. 1 illustrates a range finding method of a laser range finding apparatus according to embodiments.
FIG. 2 is an example of the laser range finding apparatus according to the embodiments.
FIG. 3 is a block diagram illustrating an operation of the laser range finding apparatus according to the embodiments.
FIG. 4 is an example of a configuration diagram of the laser range finding apparatus according to the embodiments.
FIG. 5 illustrates an operation of the laser range finding apparatus in an automatic measurement mode according to the embodiments.
FIG. 6 is a flow diagram illustrating an operation of the laser range finding apparatus in the automatic measurement mode according to the embodiments.
FIG. 7 illustrates a distance calculation operation of the laser range finding apparatus according to the embodiments.
FIG. 8 illustrates a distance calculation operation of the laser range finding apparatus according to the embodiments.
FIG. 9 illustrates a distance calculation operation of the laser range finding apparatus according to the embodiments.
FIG. 10 illustrates an example of use of the laser range finding apparatus.
FIG. 11 illustrates a laser range finding system.
FIG. 12 is an example of a user interface provided by a secondary device.
FIG. 13 is a flow diagram illustrating an operation of the secondary device.
FIG. 14 is an example of a user interface indicating a measurement mode according to the embodiments.
FIG. 15 is an example of a user interface indicating a sketch mode according to the embodiments.
FIG. 16 is an example of a user interface indicating a calculation mode according to the embodiments.
FIG. 17 is an example of a user interface indicating the calculation mode according to the embodiments.
FIG. 18 is an example of a user interface indicating the calculation mode according to the embodiments.
FIG. 19 is an example of a user interface indicating the calculation mode according to the embodiments.
FIG. 20 is an example of a user interface indicating the calculation mode according to the embodiments.
FIG. 21 is an example of a user interface for manual input of a tile standard.
FIG. 22 is an example of a user interface for manual input of a tile standard.
FIG. 23 is an example of a user interface indicating the calculation mode according to the embodiments.
FIG. 24 is an example of a user interface indicating the calculation mode according to the embodiments.
FIG. 25 is an example of a user interface for manual input of wallpaper standard.
FIG. 26 is an example of a user interface for manual input of wallpaper standard.
FIG. 27 is an example of a user interface indicating the calculation mode according to the embodiments.
FIG. 28 is an example of a user interface indicating the calculation mode according to the embodiments.
FIG. 29 is an example of a user interface for manual input of lumber standard.
FIG. 30 is an example of a user interface indicating the calculation mode according to the embodiments.
FIG. 31 is a flow diagram illustrating an operation of the secondary device.
FIG. 32 is a flowchart illustrating an embodiment of using the measurement mode in the secondary device.
FIG. 33 is a flowchart illustrating an embodiment of using the sketch mode in the secondary device.
FIG. 34 is a flowchart illustrating an embodiment of using the calculation mode in the secondary device.
FIG. 35 is a flowchart illustrating an embodiment of using the calculation mode in the secondary device.
FIG. 36 is a flowchart illustrating an embodiment of using an estimate mode in the secondary device.
FIG. 37 is a flow diagram of a laser range finding method according to the embodiments.

[Best Mode]

Hereinafter, preferred embodiments will be described in detail, examples of which are shown in the attached drawings. The detailed description below with reference to the accompanying drawings is intended to describe preferred examples of the embodiments rather than only showing embodiments that may be implemented according to the examples of the embodiments. The following detailed description includes details to provide a thorough understanding of the embodiments. However, it will be apparent to those skilled in the art that the embodiments may be practiced without these details.

Most of the terms used in the embodiments are selected from common ones widely used in the field, but some terms are arbitrarily selected by the applicant and their meaning is detailed in the following description as necessary. Accordingly, the embodiments should be understood based on intended meanings of the terms rather than mere names or meanings of the terms.

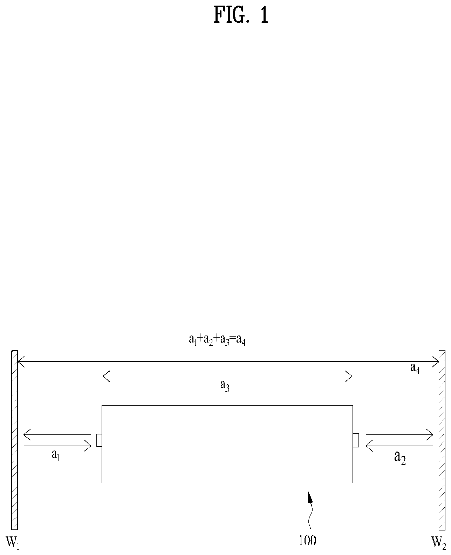

FIG. 1 illustrates a range finding method of a laser range finding apparatus according to embodiments.

The laser range finding apparatus 100 according to the embodiments is located between a first object w1 and a second object w2 and may measure a distance between the first object w1 and the second object w2.

The laser range finding apparatus 100 according to the embodiments transmits a first laser beam to the first object w1 and receives the first laser beam that is reflected by the first object w1 and returns. The laser range finding apparatus 100 transmits a second laser beam to the second object w2 and receives the second laser beam that is reflected by the second object w2 and returns. The laser range finding apparatus 100 according to the embodiments may measure and/or calculate a distance a1 to the first object w1 and a distance a2 to the second object w2 based on a time taken to transmit and receive the first laser beam and the second laser beam and/or phase changes of the first laser beam and the second laser beam. The laser range finding apparatus 100 according to the embodiments may calculate a distance a4 between the first object w1 and the second object w2 by adding a1 and a2, which are the calculated distances, and a3, which is a length of the laser range finding apparatus 100. The length a3 of the laser range finding apparatus 100 may be stored in one or more memories included in the laser range finding apparatus 100. Therefore, even when the location of the laser range finding apparatus 100 is relatively close to the first object w1 or the second object w2, the laser range finding apparatus 100 may measure the distance between the first object w1 and the second object w2. That is, as long as the laser range finding apparatus 100 can transmit the first laser beam and the second laser beam to the first object w1 and the second object w2, respectively, the distance between the first object w1 and the second object w2 can be measured regardless of the location of the laser range finding apparatus 100.

Even though the laser range finding apparatus 100 shown in the drawing is depicted as having a rectangular shape, the shape of the laser range finding apparatus 100 is not limited to the above-described embodiment.

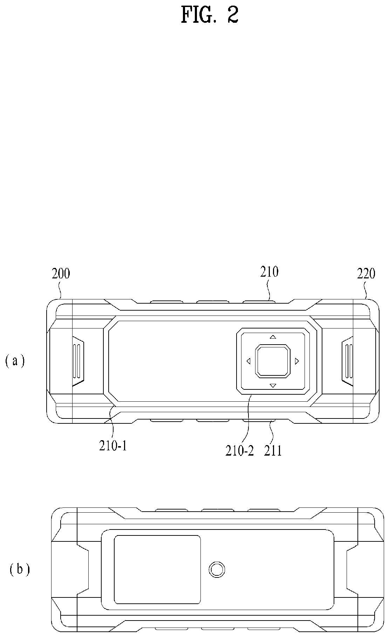

FIG. 2 is an example of the laser range finding apparatus according to the embodiments.

FIG. 2 is an example of the laser range finding apparatus 100 described with reference to FIG. 1. An upper part (a) of FIG. 2 illustrates an example of a front part of the laser range finding apparatus, and a lower part (b) thereof illustrates an example of a rear part of the laser range finding apparatus.

The laser range finding apparatus according to the embodiments includes a first laser module 200 configured to output a first laser beam and receive the first laser beam that is reflected by an object and returns, a second laser module 220 configured to output a second laser beam in an opposite direction to that of the first laser beam and receive the second laser beam that is reflected by an object and returns, and a body 210. FIG. 2 is merely an example to describe appearance of the laser range finding apparatus, and a location, a size, a configuration, and a shape of an element depicted in the drawing may be changed.

The first laser module 200 and the second laser module 220 according to the embodiments may be located at both ends along a long axis of the body 210. The first laser module 200 and the second laser module 220 may be configured to be attached to and detached from the body 210. In addition, the first laser module 200 and the second laser module 220 may be coupled (for example, hinged) to the body 210 to allow angle adjustment. The first laser module 200 and the second laser module 220 according to the embodiments each include a laser transmitter (laser irradiating unit) and a laser receiver (receiving lens). The laser transmitter and the laser receiver according to the embodiments may be configured as physically separated modules, or may be configured as one physical module. In addition, each of the first laser module 200 and the second laser module 220 according to the embodiments is coupled and surrounded with a protective cap made of silicone, and at least one protective cap is detachable from the laser module.

The first laser module 200 and/or the second laser module 220 according to the embodiments may include a lens and an optical device for laser transmission and reception of a laser module located on the same axis. When the lens and the optical device for laser transmission and reception are located on the same axis, the laser beam may be received in parallel, and thus a time taken to receive the laser beam may be more accurately measured. Therefore, this structure improves accuracy of range-finding and is advantageous for signal analysis.

As shown in the drawing, a display unit 210-1 indicating a calculation result and one or more buttons 210 for controlling an operation of the laser range finding apparatus are located on a front surface of the body 210 according to the embodiments. Locations, sizes, and/or shapes of the display unit 210-1 and the one or more buttons 210-2 according to the embodiments are not limited to the examples shown in the drawings. For example, the display unit 210-1 and the at least one button may be located side by side, or at least one button may be located on a side of the laser range finding apparatus.

The display unit 210-1 according to the embodiments may include various display units such as a liquid crystal display (LCD), and may include a touch sensitive surface for receiving touch input of a user.

The display unit 210-1 according to the embodiments may display an icon representing a measurement object of the laser range finding apparatus (for example, distance, area, volume, etc.), and a value calculated according to a measurement object (for example, distance, area, volume, etc.), information related to a measured distance (for example, distance unit, area unit, volume unit, etc.), information indicating an operation of the laser range finding apparatus (for example, one-way laser output, two-way laser output, etc.), a menu for controlling an operation of the laser range finding apparatus, a communication status of the laser range finding apparatus, battery information, etc. Information displayed through the display unit 210-1 is not limited to the present embodiment.

The one or more buttons 210-2 according to the embodiments are physical/mechanical control buttons, and may include an ON/measurement button for an instruction to turn on the laser range finding apparatus or perform measurement, a menu/unit button for changing setting (for example, adjusting sound of the laser range finding apparatus and adjusting settings such as measurement timer, favorites, brightness control, etc.), a memory button for managing capacity of a memory included in the laser range finding apparatus, a button for deleting a measurement value, a power OFF button (clear/off button) of the laser range finding apparatus, etc. A function corresponding to each button and the number of buttons are not limited to the examples shown in the drawings and may be changed. For example, one button may be implemented to correspond to a power output/off (ON/OFF) function of the laser range finding apparatus. In addition, the buttons according to the embodiments may be configured as physical buttons, a user interface (for example, icons, lists, menus, and various other forms of information displayed through a physical user interface (for example, a touchscreen)), or a combination of the physical buttons and the user interface. Accordingly, the display unit 210-1 may display a user interface for control/adjustment of one or more functions of the laser range finding apparatus, and detect and/or receive a signal (for example, a touch gesture) input by the user to command at least one function.

Although not shown in the drawings, one or more level systems may be located on a surface of the body according to the embodiments. The one or more level systems according to the embodiments visually indicate a level state of the laser range finding apparatus in order to accurately measure a distance regardless of user skill level. The one or more level systems according to the embodiments may each include a body, a hollow part penetrating the body, and a vesicle tube inserted and fixed inside the hollow part and filled with liquid and bubbles. When the laser range finding apparatus according to the embodiments is horizontal, the bubbles inside the vesicle tube are located at an exact center of the entire length of the vesicle tube to indicate that the laser range finding apparatus is horizontal. The one or more level systems according to the embodiments may be configured as a physical module or implemented by various means capable of visually indicating horizontal information such as a virtual module displayed on the display unit 210-1 (for example, an icon, a figure, various forms of information, etc. indicating a horizontal state of the laser range finding apparatus), a combination of the physical module and the virtual module, etc., and is not limited to the example illustrated in the figure. In addition, the laser range finding apparatus according to the embodiments may provide the user with the horizontal state of the laser range finding apparatus using auditory information (for example, a sound alarm) and tactile information (for example, vibration) in addition to visual information.

As illustrated in the lower part (b) of the figure, a rear part of the laser range finding apparatus may include a tripod fixing part for connecting to a tripod used to fix the laser range finding apparatus, a battery inlet, etc.

As illustrated in the figure, a USB charging terminal 211 may be located on a side of the drawing.

The laser range finding apparatus shown in the drawings is merely an example, and may optionally have more or fewer elements than those shown, may optionally combine two or more elements, or may optionally have different configurations or arrangements of elements. Although not shown in the drawings, the body 210 according to the embodiments includes, therein, a controller configured to control an operation and/or a function of the laser range finding apparatus, and one or more memories (for example, one or more computer-readable storage media) electrically connected to the controller. The controller according to the embodiments may include one or more processors. The one or more processors according to the embodiments may drive or execute a software program and/or instruction set stored in one or more memories in order to perform various functions for the laser range finding apparatus and process data. The display unit 210-1 and the one or more buttons 210-2 according to the embodiments may be electrically connected to the controller. In addition, the body 210 may further include elements such as a measuring unit for range finding, a calculator configured to perform calculation of a distance, an area, etc., a sensor unit, and a memory controller. Elements included in the body 210 are electrically connected to each other, and elements such as the controller, the measuring unit, the calculator, and the memory controller may be optionally implemented as a single chip or may be optionally implemented as separate chips.

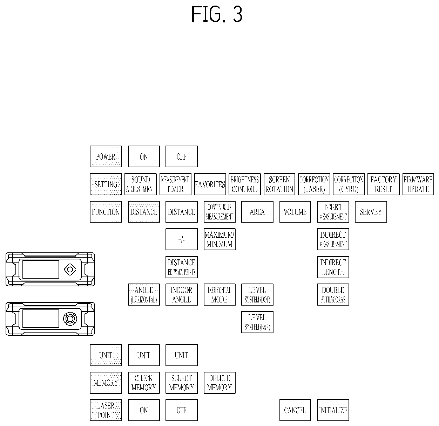

FIG. 3 is a block diagram illustrating an operation of the laser range finding apparatus according to the embodiments.

A left side of FIG. 3 illustrates examples of the laser range finding apparatus described in FIGs. 1 and 2. As described above, the display unit and various types of buttons may be located on the body surface of the laser range finding apparatus. The shapes, sizes, locations, etc. of the body, the display unit, and the buttons according to the embodiments are not limited to this example and may be changed.

Blocks on the right side of the figure represent functions and/or operations of the laser range finding apparatus that are controlled/selected according to user input signals. The functions and/or operations of the laser range finding apparatus shown in the figure are not limited to this example.

As described above, a user input signal may be received through a button and/or the display unit of the laser range finding apparatus. Each of the functions and/or operations of the laser range finding apparatus controlled/ selected according to user input signals may be configured as physical buttons, or may be configured as a user interface such as a menu and an icon displayed on the display unit (for example, the touchscreen), or a combination of the physical buttons and the user interface.

For example, a user input signal according to the embodiments may correspond to one touch gesture through one physical button or a user interface such as a menu or an icon displayed on the display unit (for example, the touchscreen) according to a function and/or operation of the laser range finding apparatus. In addition, a user input signal may correspond to a combination of sequential or overlapping inputs of one or more physical buttons, a combination of inputs through one or more physical buttons and touch gestures through the user interface, and a combination of sequential or overlapping touch gestures through the user interface according to a function and/or operation of the laser range finding apparatus. The user input signal according to the embodiments is not limited to the present embodiment, and may include various input signals (for example, a voice input signal and a signal delivered through a secondary device capable of communicating with the laser range finding apparatus (for example, a device including a display unit such as a mobile phone, a laptop computer, or a desktop computer)). The display unit (for example, the display unit 210-1 described with reference to FIG. 2) may display a state of the laser range finding apparatus or may display information necessary to change/control a function, an icon, etc. according to a user input signal.

The laser range finding apparatus may be turned on or off depending on the user input signal for control/selection of the power. For example, when a user input signal for turning on the power (for example, when the user presses the power ON and measurement button described in FIG. 2 once) is input, the laser range finding apparatus is turned on. The display unit according to the embodiments may display information (for example, an icon, etc.) indicating a state of the laser range finding apparatus (power on and ready for measurement). When a user input signal for turning off the power (for example, when the user presses the power clear/Off button described in FIG. 2 for more than a preset time (for example, 3 seconds)) is input, the power of the laser range finding apparatus is turned off. In addition, the power of the laser range finding apparatus according to the embodiments may be automatically turned off when an input signal of the user is not input for a preset time (for example, 2 minutes). The preset time according to the embodiments may be changed according to user input.

A setting function of the laser range finding apparatus may be selected/controlled according to a signal input by the user to control/select setting (for example, when a user sequentially presses the menu/unit button described in FIG. 2 one or more times, each setting function corresponds to a user signal according to the number of times the menu/unit button is pressed). The setting function of the laser range finding apparatus according to the embodiments may include selection/control of various setting parameters shown in the drawing, such as sound control and measurement timer.

A function of the laser range finding apparatus is selected/controlled according to a signal input by the user to control/select the function of the laser range finding apparatus. The function of the laser range finding apparatus may include various functions shown in the drawing, such as setting of a standby mode and a measurement mode, range finding according to the measurement mode, continuous range finding, area calculation, volume calculation, and indirect measurement.

The standby mode according to the embodiments is a function in which the user removes a previously set operation and/or function in order to set a new operation and/or function of the laser range finding apparatus. The display unit according to the embodiments displays information indicating that the laser range finding apparatus is in the standby mode (for example, information such as Ready, an icon, etc.) according to a signal input by the user to command the standby mode (for example, pressing the clear/Off button described in FIG. 2 once).

In a power-on state or the standby mode, the laser range finding apparatus sets the measurement mode to measure a one-way distance according to a signal input by the user to set a one-way measurement mode to measure the one-way distance to the right or left of the laser range finding apparatus, including the length of the laser range finding apparatus (for example, a signal input by the user to press the memory button for a preset time (for example, 3 seconds) or more). Thereafter, according to a signal input by the user to command one-way range finding (for example, a signal input by the user to press the ON/measurement button described in FIG. 2), the laser range finding apparatus measures a one-way distance corresponding to the set measurement mode. Then, the laser range finding apparatus may initialize measurement according to a signal input by the user to initialize measurement (for example, a signal input by the user to press the ON/measurement button), and the laser range finding apparatus may measure a one-way distance again according to a signal input by the user to command measurement (for example, a signal input by the user to press the ON/measurement button).

Upon receiving a signal input by the user to command continuous measurement of a one-way distance (for example, a signal input by the user to press the ON/measurement button for a preset time (for example, 3 seconds) or more), the laser range finding apparatus continuously measures a one-way distance corresponding to the set measurement mode. Thereafter, the laser range finding apparatus may suspend continuous measurement according to a signal input by the user to suspend measurement (for example, a signal input by the user to press the ON/measurement button or a Clear/Off button).

In addition, in the power-on state or the standby mode, the laser range finding apparatus sets the measurement mode to measure one-way distance according to a signal input by the user to set the one-way measurement mode to measure the one-way distance to the right or left of the laser range finding apparatus, excluding the length of the laser range finding apparatus (for example, a signal input by the user to press the memory button for a preset time (for example, 3 seconds) and pressing the memory button again)). Thereafter, the laser range finding apparatus measures the one-way distance corresponding to the set measurement mode according to a signal input by the user to command one-way range finding (for example, a signal input by the user to press the ON/measurement button described in FIG. 2). Thereafter, the laser range finding apparatus may initialize measurement according to a signal input by the user to initialize measurement (for example, a signal input by the user to press the ON/measurement button), and the laser range finding apparatus may measure a one-way distance according to a signal input by the user to command measurement again (for example, a signal input by the user to press the ON/measurement button).

Upon receiving a signal input by the user to command continuous measurement of the one-way distance excluding the length of the laser range finding apparatus (for example, a signal input by the user to press the ON/measurement button for a preset time (for example, 3 seconds) or more), the laser range finding apparatus continuously measures the one-way distance corresponding to the set measurement mode. Thereafter, the laser range finding apparatus may suspend continuous measurement according to a signal input by the user to suspend measurement (for example, a signal input by the user to press the ON/measurement button or the Clear/Off button).

The preset time or a basic direction (right or left) of the one-way range finding mode according to the embodiments may be set and changed according to a user input signal.

In the power-on state or the standby mode, the laser range finding apparatus according to the embodiments may set a two-way range finding mode according to a signal input by the user to set the two-way range finding mode for measuring a two-way distance (for example, a signal input by the user to press the memory button for a preset time (for example, 3 seconds) or more and pressing the memory button twice again). In addition, after the power is turned on, the laser range finding apparatus may measure a two-way distance according to a signal input by the user to command measurement of the two-way distance (for example, a signal input by the user to press the ON/measurement button twice after the power is turned on). Thereafter, the laser range finding apparatus may initialize measurement according to a signal input by the user to initialize measurement (for example, a signal input by the user to press the ON/measurement button), and the laser range finding apparatus may measure a two-way distance according to a signal input by the user to command measurement again (for example, a signal input by the user to press the ON/measurement button).

The laser range finding apparatus continuously measures the two-way distance according to a signal input by the user to command continuous measurement of the two-way distance (for example, a signal input by the user to press the ON/measurement button for a preset time (3 seconds) or more after the power is turned on). Thereafter, the laser range finding apparatus may suspend continuous measurement according to a signal input by the user to suspend measurement (for example, a signal input by the user to press the ON/measurement button or the Clear/Off button).

In a power-on state or the standby mode, the display unit may display information indicating an area measurement mode (for example, a rectangular icon, etc.) according to a signal input by the user to select the area measurement mode (for example, a signal input by the user to press a menu/unit button). The laser range finding apparatus performs first measurement according to a signal input by the user to command first measurement (for example, a horizontal length) in a rectangular shape, and the display unit displays a first measurement value and/or measurement target (for example, a rectangular icon having horizontal sides displayed in a dotted line form, etc.). The laser range finding apparatus performs second measurement according to a signal input by the user to command second measurement (for example, a vertical length), and the display unit displays a second measurement value and/or measurement target (for example, a rectangular icon having vertical sides displayed in a dotted line form, etc.). Thereafter, the laser range finding apparatus (for example, the calculator described above) calculates the total area based on the first measurement value and the second value, and displays the calculated area value through the display unit.

In the power-on state or the standby mode, the display unit may display information indicating the volume measurement mode (for example, a hexagon-shaped icon, etc.) according to a signal input by the user to select the volume measurement mode (for example, a signal input by the user to press the menu/unit button twice). According to a signal input by the user to command the first measurement (for example, a horizontal length) (for example, a signal input by the user to press the ON/measurement button), the laser range finding apparatus performs the first measurement, and the display unit displays the first measurement value and/or the measurement target (for example, a hexagonal icon having horizontal sides displayed in a dotted line form, etc.). According to a signal input by the user to command the second measurement (for example, a vertical length) (for example, a signal input by the user to press the ON/measurement button), the laser range finding apparatus performs the second measurement, and the display unit displays the second measurement value and/or the measurement target (for example, a hexagonal icon having vertical sides displayed in a dotted line form, etc.). According to a signal input by the user to command third measurement (for example, a height) (for example, a signal input by the user to press the ON/measurement button), the laser range finding apparatus performs the third measurement, and the display unit displays a third measurement value and/or the measurement target (for example, a hexagonal icon having a height displayed in a dotted line form, etc.). Thereafter, the laser range finding apparatus (for example, the calculator described above) calculates the total volume based on the first measurement value, the second value, and the third value, and displays the calculated volume value through the display unit.

In the power-on state or the standby mode, according to a signal input by the user to select an area measurement mode of a right triangle (for example, a signal input by the user to press the menu/unit button 3 times), the display unit may display information indicating the area measurement mode (for example, a right triangle icon, etc.). According to a signal input by the user to command first measurement (for example, a base length) (for example, a signal input by the user to press the ON/measurement button), the laser range finding apparatus performs the first measurement, and the display unit displays a first measurement value and/or a measurement target (for example, a right triangle icon having a base displayed in a dotted line form, etc.). According to a signal input by the user to command second measurement (for example, a height) (for example, a signal input by the user to press the ON/measurement button), the laser range finding apparatus performs the second measurement, and the display unit displays a second measurement value and/or a measurement target (for example, a right triangle icon having a height displayed in a dotted line form, etc.). Thereafter, the laser range finding apparatus (for example, the calculator described above) calculates the total area based on the first measurement value and the second value, and displays the calculated area value through the display unit.

In the power-on state or the standby mode, according to a signal input by the user to select a height measurement mode of a right triangle (for example, referred to as a Pythagorean mode) (for example, a signal input by the user to press the menu/unit button 4 times), the display unit may display information indicating the Pythagorean mode (for example, a right triangle icon, etc.). According to a signal input by the user to command first measurement (for example, a base length) (for example, a signal input by the user to press the ON/measurement button), the laser range finding apparatus performs the first measurement, and the display unit displays a first measurement value and/or a measurement target (for example, a right triangle icon having a base displayed in a dotted line form, etc.). According to a signal input by the user to command second measurement (for example, a hypotenuse) (for example, a signal input by the user to press the ON/measurement button), the laser range finding apparatus performs the second measurement, and the display unit displays a second measurement value and/or a measurement target (for example, a right triangle icon having a hypotenuse displayed in a dotted line form, etc.). Thereafter, the laser range finding apparatus (for example, the calculator described above) calculates the height of the right triangle based on the first measurement value and the second value, and displays the calculated height value through the display unit.

When a signal input by the user to select/control an angle of the laser range finding apparatus is input, the angle of the laser range finding apparatus is selected/controlled. The angle of the laser range finding apparatus according to the embodiments includes various angle-related parameters shown in the drawings, such as horizontal settings and indoor angles. The display unit according to the embodiments may display information, icons, etc. indicating angles selectable by the user.

When a signal input by the user to select/control the unit of the measurement target of the laser range finding apparatus is input, the unit of the measurement target of the laser range finding apparatus may be selected/controlled. In the standby mode described above, according to a signal input by the user to change the unit of the measurement target (for example, a signal input by the user to press the menu/unit button for a preset time (for example, 3 seconds) or more), the display unit (for example, the display unit 210-1) according to the embodiments may display information of one or more units (for example, mm, cm, m, in, ft, etc.) selectable by the user. According to a signal input by the user to select at least one of the one or more units (for example, a signal input by the user to press the ON/measurement button or the Clear/Off button), the display unit may display the selected unit information.

When a signal input by the user to control the memory of the laser range finding apparatus is input, the laser range finding apparatus may perform control functions such as checking, selection, and deletion of the memory. For example, the display unit may display selected data according to a signal input by the user to call data stored in the memory (for example, a measured distance) (for example, a signal input by the user to press the memory button). Thereafter, the display unit may display other data according to a signal input by the user to call the other data stored in the memory (for example, a signal input by the user to press the memory button).

When a signal input by the user to control a laser module of the laser range finding apparatus (for example, the above-described first laser module, second laser module, etc.) is input, functions such as transmission/reception of a laser beam are controlled. For example, in the standby mode, the laser range finding apparatus may transmit a laser beam according to a signal input by the user to command transmission of a laser beam (for example, a signal input by the user to press the ON/measurement button or the menu/unit button). The laser range finding apparatus according to the embodiments performs laser beam transmission through at least one laser module among the first laser module and the second laser module according to the set measurement mode (for example, a one-way measurement mode including the length of the laser range finding apparatus, a one-way measurement mode excluding the length of the laser range finding apparatus, a two-way measurement mode, etc.).

The laser range finding apparatus according to the embodiments may end laser beam transmission when measurement is completed according to the measurement mode, when there is no user input signal for a preset time (for example, 20 seconds) or more after laser beam transmission, or according to a signal input by the user to command turning off the power of at least one laser module configured to emit a laser beam according to the measurement mode (for example, a signal input by the user to press the Clear/Off button).

The functions and/or operations of the laser range finding apparatus shown in FIG. 3 are not limited to the examples described above.

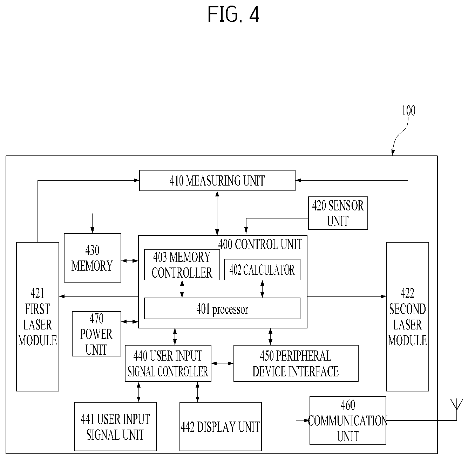

FIG. 4 is an example of a configuration diagram of the laser range finding apparatus according to the embodiments.

FIG. 4 is a configuration diagram of the laser range finding apparatus described with reference to FIGs. 1 to 3.

The laser range finding apparatus 100 shown in the figure is merely an example. Therefore, the laser range finding apparatus 100 according to the embodiments may optionally have more or fewer elements than the elements shown in the figure. In addition, the laser range finding apparatus 100 according to the embodiments may optionally combine two or more elements among the elements shown in the figure, or may optionally have different configurations or arrangements of elements. In addition, the elements shown in the figure may be implemented as hardware, software, or a combination of hardware and software including one or more signal processing circuits and/or application specific integrated circuits (ASICs). The elements shown in the figure are electrically connected to each other. In addition, the elements shown in the figure are electrically/communicatively connected to the button and/or the display unit described with reference to FIG. 2. Therefore, the operation and/or function (for example, the operation and/or function described with reference to FIG. 3) of the laser range finding apparatus 100 may be controlled according to a user input signal (for example, a button input signal, a touch gesture through the display unit, etc.).

The laser range finding apparatus 100 according to the embodiments may include a controller 400, a measuring unit 410, a sensor unit 420, a first laser module 421, a second laser module 422, a memory 430, a system unit 440, a user input signal unit 441, a display unit 442, a peripheral device interface 450, a communication unit 460, and a power unit 470.

The controller 400 according to the embodiments may control operations of the elements of the laser range finding apparatus 100 to perform and control the operations and/or functions of the laser range finding apparatus 100 according to a user input signal (for example, a signal input by the user to select the area measurement mode described with reference to Fig. 3). In addition, the controller 400 according to the embodiments may control the operations and/or functions of the laser range finding apparatus 100 regardless of the user input signal (for example, turning of the power of the laser range finding apparatus 100 after a preset time, etc.). The controller 400 according to the embodiments may allow visual output (for example, measured distance values, graphics, images, and other combinations thereof) to be displayed through the display unit 442, or allow auditory output (for example, an alarm, etc.) to be output through a speaker (not shown in the figure).

The controller 400 according to the embodiments may include a processor 401, a calculator 402, and a memory controller 403. The processor 401 shown in the figure is illustrated as one block, but may include one or more processors.

The processor 401 according to the embodiments may execute a software program to perform the operations and/or functions of the laser range finding apparatus 100 (for example, the operations and/or functions of the laser range finding apparatus described with reference to FIG. 3). One or more software programs or data sets according to the embodiments are stored in the memory 430.

The calculator 402 according to the embodiments may be included in the processor 401. The calculator 402 may calculate a distance to the first object and/or the second object or calculate a distance between the first object and the second object, the area, the volume, etc. based on a value measured by the measuring unit 410 and information detected by the sensor unit 420 (for example, an inclination of the laser range finding apparatus, etc.).

An operation of the calculator 402 to calculate the distance between the first object and the second object is expressed by the following equation.

[Equation 1]

$$a_1 + a_2 + a_3 = a_4$$

a1 denotes a distance between the first object and the laser range finding apparatus, a2 denotes a distance between the second object and the laser range finding apparatus, and a3 represents the length of the laser range finding apparatus. a4 is the distance between the first object and the second object and corresponds to the sum of a1, a2, and a3.

As described with reference to FIGs. 1 to 3, when the first laser module 421 and the second laser module 422 are attached to the body so that angle adjustment is allowed, the distance between the first object and the second object is expressed by the following equation.

[Equation 2]

$$d_3 = \sqrt{(d_1)^2 + (d_2)^2 - 2(d_1)(d_2)\cos(\theta)}$$

d1 denotes the distance between the first object and the laser range finding apparatus, and d2 denotes the distance between the second object and the laser range finding apparatus. When the first object and the second object are not located on the horizontal axis, an angle occurs between the first laser module 421 configured to output a first laser beam toward the first object and the second module 422 configured to output a second laser beam toward the second object. 0 of the equation denotes the angle between the first laser module and the second module. d3 denotes the distance between the first object and the second object.

The memory controller 403 according to the embodiments may control access of the elements of the laser range finding apparatus 100 (for example, the processor 401, the calculator 402, the sensor unit 420, etc.) to access the memory 430.

The controller 400 may be implemented as a single chip including the processor 401, the calculator 402, and the memory controller 403, or may be implemented as separate chips in which the processor 401, the calculator 402, and the memory controller 403 are implemented.

The measuring unit 410 according to the embodiments measures a time at which the laser beam is transmitted from each of the first laser module 421 and the second laser module 422, and a time at which the transmitted laser beam is reflected by an object and received, or a phase of the reflected laser beam. In addition, when the first laser module 421 and the second laser module 422 are attached or coupled to the body so that rotation or movement at an angle is allowed, the measuring unit 410 may measure the angle between the first laser module 421 and the second laser module 422, or measure an angle between the two laser beams output from the first laser module 421 and the second laser module 422. As described above, the value measured by the measuring unit 410 is transmitted to the controller 400 (or the calculator 402). Further, the measuring unit 410 may perform measurement according to a measurement signal from the controller 400, or may automatically perform measurement according to an operation of the first laser module 421 and/or the second laser module 422.

The sensor unit 420 according to the embodiments may include a horizontal sensor, an acceleration sensor, a gyro sensor (for example, 3 Angle G-sensor, etc.), a temperature sensor, etc., and types of sensors included in the sensor unit 420 are not limited to this example. The laser range finding apparatus 100 according to the embodiments may verify whether the laser range finding apparatus is horizontal through the sensor unit 420 so that accurate range finding be performed regardless of the user skill level. The horizontal information detected by the sensor unit 420 according to the embodiments and the inclination (for example, an angle, etc.) of the laser range finding apparatus 100 are used in a calculation process of the controller 400 (or the calculator 402). The sensor unit 420 may detect information according to a control signal from the controller 400, or may detect information regardless of a control signal and store the information in the memory 430 or provide the information to the controller 400.

The first laser module 421 and the second laser module 422 may output and receive the first laser beam and the second laser beam, respectively. The first laser module 421 and/or the second laser module 422 may output laser beams, respectively, simultaneously, sequentially, or continuously according to a control signal of the controller 400 (for example, the one-way measurement mode, the two-way measurement mode, etc. described with reference to FIG. 3).

The memory 430 according to the embodiments may store data output from the controller 400, data detected by the sensor unit 42, other arbitrary data, software, etc. Although shown as one block in the drawing, the memory 430 according to the embodiments may include one or more memories. The memory 430 according to the embodiments may include a high-speed random access memory, and may include one or more magnetic disk storage devices, a nonvolatile memory such as a flash memory device, or other nonvolatile semiconductor memories. Software components stored in the memory may include an operating system, a communication module (or a command set), a GUI module (or a command set), and at least one application (a command set). In addition, when some elements (for example, the calculator 402) of the controller 400 are configured as software, the memory may further include a command set corresponding to functions of the corresponding elements.

A user input signal controller 440 according to the embodiments controls the user input signal unit 441 configured to receive a user input signal and the display unit 442, or connects the user input signal unit 441 and the display unit 442 to the controller 440. Therefore, the user input signal controller 440 according to the embodiments processes a user input signal and delivers the user input signal to the controller 400, and the controller 400 performs a control operation to perform the functions and/or operations of the laser range finding apparatus according to the user input signal.

The user input signal unit 441 according to the embodiments may include not only various physical buttons such as the one or more buttons described with reference to FIGs. 1 to 3, dials, and slide switches, but also various user input signal devices such as an input controller such as a keyboard electrically connected to the laser range finding apparatus 100, and a microphone for detecting a voice signal of the user.

The display unit 442 according to the embodiments may display a distance calculated by the controller 400 (or the calculator 402), visual output associated therewith (a distance value, an icon, etc.), information about the functions and/or operations of the laser range finding apparatus (for example, the functions and/or operations described with reference to FIG. 3 such as laser output, memory reset, power on/off, and calculation operation, etc.), and a user interface (for example, an icon, a menu, etc.) for receiving a signal (for example, a touch gesture) input by the user to control the functions and/or operations of the laser range finding apparatus. In addition, the display unit 442 may display information about the state of the laser range finding apparatus (for example, the horizontal state, the inclination, etc. described with reference to FIG. 2), or display information about other devices that may or are communicating through the communication unit. Information displayed through the display unit 442 is not limited to examples. As described above, the display unit 442 may include a touchscreen that includes a touch-sensitive surface configured to receive an input signal from the user based on haptic and/or tactile contact, and a sensor (or a sensor set). The touchscreen according to the embodiments may optionally use various display technologies including Liquid Crystal Display (LCD), Light Emitting Polymer Display (LPD), and Light Emitting Diode (LED), and is not limited to this example. In addition, although not shown in the figure, the laser range finding apparatus 100 may further include an audio output device (for example, a speaker) to provide auditory output in addition to visual output to the user.

The peripheral device interface 450 may connect the controller 4100 with an external device capable of communicating with the laser range finding apparatus 100 (for example, robots, vehicles, AR/VR/XR devices, smartphones, mobile devices, home appliances, IoT (Internet of Thing) devices, AI devices/servers, etc.). The peripheral device interface 450 may transmit a user input signal input from an external device to the user input signal controller 440 or to the controller 400 through the communication unit 460. The peripheral device interface 450 may deliver a value measured by the laser range finding apparatus 100 to an external device through the communication unit 460.

The communication unit 460 may communicate with a device that communicates with another wireless device through a wireless access network (for example, 5G NR (New RAT), LTE (Long Term Evolution), Wi-Fi, 6G, Bluetooth, etc.), robots, vehicles, AR/VR/XR devices, smartphones, mobile devices, home appliances, IoT devices, AI devices/servers, etc. The communication unit 460 may transmit values measured by the laser range finding apparatus 100 (for example, one-way distance, two-way distance, area value, volume value, etc.) and information related thereto to an external device, or receive a signal input by the user to control the functions and/or operations of the laser range finding apparatus 100 from an external device. The communication unit 460 includes an antenna system, an RF transceiver, one or more amplifiers, a tuner, one or more oscillators, a digital signal processor, a CODEC chipset, a Subscriber Identity Module (SIM) card, memory, etc. However, the embodiments are not limited thereto, and the communication unit 460 may include a known function for performing such a function. A communication circuit may communicate with other devices over the Internet, which is also referred to as the World Wide Web (WWW), intranet and a network, and/or a cellular telephone network, a wireless LAN, and/or a wireless network such as a metropolitan area network (MAN), and wireless communication. Wireless communication includes communication protocols for GSM (Global System for Mobile Communication), EDGE (Enhanced Data GSM Environment), WCDMA (Wideband Code Division Multiple Access), CDMA (Code Division Multiple Access), TDMA (Time Division Multiple Access), Bluetooth, Wi-Fi (for example, IEEE802.11a, IEEE802.11b, IEEE802.11g, and/or IEEE802.11n), Voice over Internet Protocol (VoIP), Wi-MAX, email, instant messaging, and/or Short Message Service (SMS) or any other suitable communication protocol, including any communication protocol developed in the future. However, it is possible to use any of a plurality of communication standards, protocols, and technologies, which are not limited thereto.

The power unit 470 supplies power to various elements of the laser range finding apparatus 100. The power unit 470 may optionally further include a power management system, one or more power sources (for example, a battery, etc.), power management, and other components for distribution. Power supply by the power unit 470 may be performed according to a control signal from the controller 400.

FIG. 4 is only an example, and elements of the configuration diagram of the laser range finding apparatus 100 are not limited to this example. Therefore, the names, configurations, arrangements, functions, etc. of the above-described elements are not limited to this example and may be changed. Further, elements not shown in FIG. 4 may be added to perform the operation and/or function of the laser range finding apparatus described with reference to FIGs. 1 to 3 or to achieve the purpose.

Various components of the apparatus according to the embodiments may be configured by hardware, software, firmware, or a combination thereof. Various components of embodiments may be implemented as one chip, for example, one hardware circuit. Depending on the embodiments, components according to the embodiments may be implemented as separate chips, respectively. Depending on the embodiments, at least one of the components of the apparatus according to the embodiments may be configured as one or more processors capable of executing one or more programs, and the one or more programs may perform one or more of operations/methods among the operations/methods according to the embodiments, or may include instructions for performing the operations/methods. Executable instructions for performing the methods/operations of the apparatus according to the embodiments may be stored in a non-transitory CRM or other computer program products configured for execution by one or more processors, or may be stored in a transitory CRM or other computer program products configured for execution by one or more processors. In addition, the memory according to the embodiments may be used as a concept that includes not only a volatile memory (for example, a RAM, etc.) but also a nonvolatile memory, a flash memory, a PROM, etc. In addition, the memory may be implemented in the form of a carrier wave, such as transmission over the Internet. In addition, a processor-readable recording medium is distributed in a computer system connected to a network, so that processor-readable code may be stored and executed in a distributed manner.

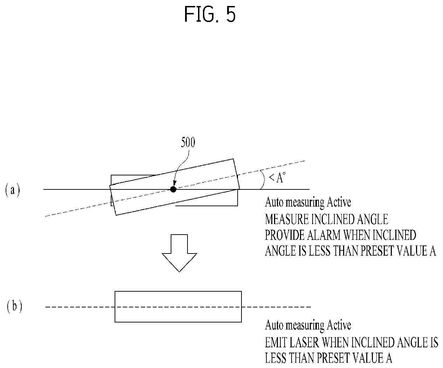

FIG. 5 illustrates an operation in the automatic measurement mode of the laser range finding apparatus according to the embodiments.

FIG. 5 illustrates an example of range finding of the laser range finding apparatus (for example, the laser range finding apparatus 100) described with reference to FIGs. 1 to 4.

In the handheld laser range finding apparatus, accuracy of a measured distance may vary depending on the user skill level. A reason therefor is that, when the user measures a distance between two objects by outputting a laser in a state in which the laser range finding apparatus is not horizontal, the distance (shortest distance) between the two objects cannot be accurately measured since the laser range finding apparatus is inclined. Therefore, the laser range finding apparatus (for example, the laser range finding apparatus 100 described with reference to FIGs. 1 to 4) according to the embodiments may measure a distance in the automatic measurement mode to measure a distance value corresponding to a straight line corresponding to a shortest distance between two objects. The automatic measurement mode according to the embodiments may be preset or may be set, selected, and/or controlled according to a user input signal. The display unit (for example, the display unit 442) according to the embodiments may provide information about the automatic measurement mode (for example, various user interfaces of user-selectable graphics such as ON/OFF mode of an automatic measurement function).

An upper part (a) of the figure illustrates an example of the automatic measurement mode of the laser range finding apparatus.

The laser range finding apparatus according to the embodiments may measure an inclination of the laser range finding apparatus in the automatic measurement mode, compare the measured inclination with a preset value, determine whether the laser range finding apparatus is horizontal with respect to a horizontal axis, and provide an alarm to the user when the laser range finding apparatus is horizontal.

The laser range finding apparatus (for example, the sensor unit 400 described with reference to FIG. 4) according to the embodiments detects an inclination of the laser range finding apparatus. The laser range finding apparatus (for example, the controller 400, the measuring unit 410, etc. described with reference to FIG. 4) according to the embodiments may determine whether the secured inclination is smaller than a preset value A (for example, 1°). As shown in (a), the inclination of the laser range finding apparatus according to the embodiments may be expressed as an angle between a straight line representing a path along which the first laser beam and the second laser beam output from the first laser module and second laser module are output or a straight line (for example, a dotted line shown in the figure) passing through a center of the inclined laser range finding apparatus and a straight line indicating a horizontal state of the laser range finding apparatus (hereinafter referred to as a horizontal axis). In addition, the inclination of the laser range finding apparatus according to the embodiments may include a first angle between the horizontal axis and a first straight line indicating a distance between the center 500 of the laser range finding apparatus and the first object (for example, first straight line corresponding to the first laser beam), and a second angle between the horizontal axis and a second straight line indicating a distance between the center 500 of the laser range finding apparatus and the second object (for example, second straight line corresponding to the second laser beam). The first angle and the second angle according to the embodiments may be the same or different from each other.

The center of the inclined laser range finding apparatus and the center of the horizontal laser range finding apparatus are expressed as the same point 500. The horizontal axis according to the embodiments is an axis considered to pass through the center of the laser range finding apparatus located parallel to the ground, and represents a state in which the laser range finding apparatus is not inclined. Therefore, an angle between the horizontal axis and a straight line indicating the path of the first laser beam and second laser beam output from the laser range finding apparatus in a horizontal state is 0°. The preset value according to the embodiments may be set to a value that has minimal influence on accuracy of the distance measured by the laser range finding apparatus. In other words, even when the user does not accurately level the laser range finding apparatus, the inclination does not significantly affect the actually measured distance. Therefore, even when the laser range finding apparatus is inclined by the corresponding inclination, errors may be minimized when measuring the one-way or two-way distance, so that more accurate information may be provided to the user. The preset value according to the embodiments may be stored in a memory (for example, the memory 430 described with reference to FIG. 4) and may be changed according to a user input signal.

The laser range finding apparatus according to the embodiments may provide an alarm to inform the user that range finding is possible when the measured inclination is less than the preset value. The alarm according to the embodiments includes visual output provided through a display unit (for example, the display unit 442 described with reference to FIG. 4), auditory output which is output through an audio output device (for example, alarm, etc.), vibration, etc. In addition, the laser range finding apparatus may provide a result of the automatic measurement function (for example, information indicating that measurement is possible, etc.) to an external device capable of performing wireless communication.

The laser range finding apparatus according to the embodiments may provide an alarm until the inclination measured according to movement of the user becomes less than a preset value. A type, a provision period, a method, etc. of the alarm according to the embodiments may be set according to a user input signal.

FIG. 5(b) shown in a lower part of the figure illustrates an operation of the laser range finding apparatus when the measured inclination is less than the preset value.

When the measured angle is less than the preset value, the laser range finding apparatus (for example, the controller 400, the measuring unit 410, etc.) does not provide an alarm and may output a laser beam automatically or according to a user input signal. Further, the laser range finding apparatus may store the inclination of the laser range finding apparatus, calculate the distance based on the stored inclination value, or correct the calculated distance value to provide an accurate calculation value to the user.

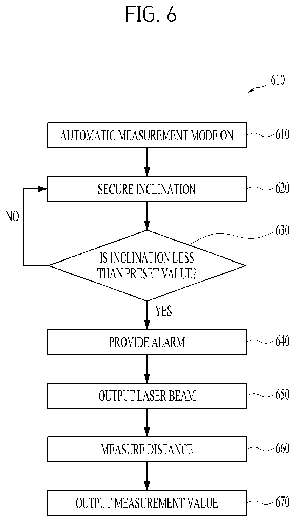

FIG. 6 is a flow diagram illustrating an operation of the laser range finding apparatus in the automatic measurement mode according to the embodiments.

The flow diagram 600 of FIG. 6 illustrates an operation of the laser range finding apparatus in the automatic measurement mode described with reference to FIG. 5 (for example, the laser range finding apparatus 100 described with reference to FIGs. 1 to 5).

The laser range finding apparatus according to the embodiments may measure a distance in the automatic measurement mode automatically or according to a user input signal (610) (automatic measurement mode on). The laser range finding apparatus (or the sensor unit 420) secures (or measures or detects) an inclination (620). The laser range finding apparatus determines whether the secured inclination is less than a preset value (630). When the secured inclination is not less than the preset value, the laser range finding apparatus secures the inclination (620). The laser range finding apparatus detects an inclination until the secured inclination becomes less than the preset value and may not provide an alarm to the user until the inclination becomes less than the preset value.

When the secured inclination is less than the preset value, the laser range finding apparatus according to the embodiments provides an alarm to the user (640) .

The laser range finding apparatus may output a laser beam according to a user input signal or automatically (650) and measure a distance (660). Alarm provision and laser beam output operations of the laser range finding apparatus according to the embodiments may be performed simultaneously or sequentially. Further, the laser range finding apparatus according to the embodiments may store an inclination less than the preset value. The laser range finding apparatus may store the inclination at the same time as providing an alarm or outputting a laser beam, may sequentially store the inclination, or may store the inclination first. The laser range finding apparatus may output a measurement value (670).

The flow diagram shown in the figure is only an example, and the order of steps and elements included in the flow diagram may be changed or merged.

As described above, the preset value according to the embodiments is set to a value that has minimal influence on the accuracy of the distance measured by the laser range finding apparatus. In order to increase the accuracy of the measured distance, the laser range finding apparatus according to the embodiments may store a measured inclination (for example, an inclination less than the preset value) in the memory, output a laser to calculate a distance, and then reflect the measured inclination value in the calculated distance to correct the distance value.

In addition, the laser range finding apparatus may store the inclination value of the laser range finding apparatus (for example, a static angle and a dynamic angle secured from a horizontal sensor, a gyro sensor, an acceleration sensor, etc.) in the memory regardless of the preset value, calculate a distance, and then correct the distance value. Since the dynamic angle measured by the sensor unit (for example, the sensor unit 420) may change (drift) depending on the influence of temperature, the laser range finding apparatus may correct the dynamic angle based on information secured from the temperature sensor, and then calculate a correction value for correcting the distance value.

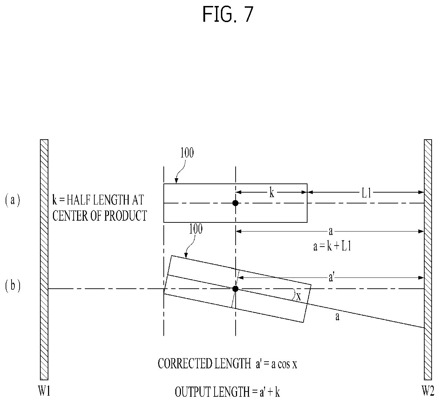

FIG. 7 illustrates a distance calculation operation of the laser range finding apparatus according to the embodiments.

FIG. 7 illustrates an operation of calculating a distance measured by the laser range finding apparatus according to the embodiments (for example, the laser range finding apparatus 100 described with reference to FIGs. 1 to 6) according to the one-way measurement mode including the length of the laser range finding apparatus.

An upper part (a) of FIG. 7 illustrates an example of a distance measured according to the one-way measurement mode including the length of the laser range finding apparatus in a state in which the laser range finding apparatus is horizontal. A parameter k shown in the figure represents a half of the total length of the laser range finding apparatus, that is, a length from the center point of the laser range finding apparatus to a right or left end (for example, an end at which a laser beam of a receiver configured to receive the laser beam (for example, a receiver of the first laser module 200) is received) of the laser range finding apparatus. A parameter L1 shown in the figure represents a distance measured by the laser range finding apparatus outputting a laser beam from one of the first laser module or the second laser module and receiving the laser beam reflected by an object (for example, w2). A parameter "a" shown in the figure is the sum of k and L1, and a final output distance provided to the user may be expressed as a + k (half the remaining length of the laser range finding apparatus).

As described with reference to FIGs. 5 and 6, the laser range finding apparatus may provide an alarm to the user and measure a distance when the inclination is less than the preset value in the automatic measurement mode. A lower part (b) of FIG. 7 illustrates an example of a distance measured according to the one-way measurement mode including the length of the laser range finding apparatus when the inclination of the laser range finding apparatus is less than a preset value. A parameter "a" shown in the figure represents a distance between the center of the laser range finding apparatus and the object measured in a state in which the laser range finding apparatus is inclined. A value of "a" is calculated as described with reference to FIG. 7(a). However, in order to calculate an accurate distance that needs to be actually provided to the user, a distance a' from the center of the laser range finding apparatus to the object when the laser range finding apparatus is considered to be in a horizontal state is required. An inclination x according to the embodiments refers to an angle between a straight line corresponding to a distance from the center of the inclined laser range finding apparatus to the object w2 and a straight line corresponding to a distance from the center of the horizontal laser range finding apparatus to the object w2. The inclination x according to the embodiments may be secured by a sensor unit (for example, the sensor unit 420) of the laser range finding apparatus. The laser range finding apparatus may secure the inclination x and use the inclination x to calculate a value of a' according to an equation shown in the figure. A final output distance according to the embodiments may be expressed as a' + k (half the remaining length of the laser range finding apparatus).

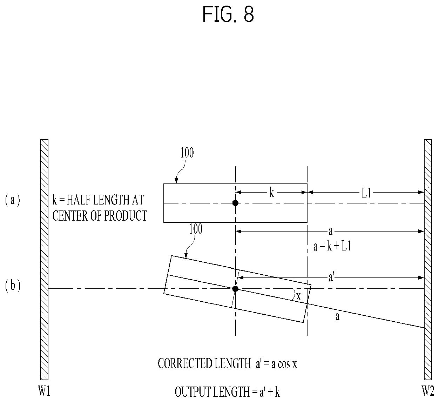

FIG. 8 illustrates a distance calculation operation of the laser range finding apparatus according to the embodiments.

FIG. 8 illustrates an operation of calculating a distance measured by the laser range finding apparatus according to the embodiments (for example, the laser range finding apparatus 100 described with reference to FIGs. 1 to 6) according to the one-way measurement mode including the length of the laser range finding apparatus.

An upper part (a) of FIG. 8 illustrates an example of a distance measured according to the one-way measurement mode including the length of the laser range finding apparatus in a state in which the laser range finding apparatus is horizontal. A parameter L1 shown in the figure represents a distance measured by the laser range finding apparatus outputting a laser beam from one of the first laser module or the second laser module and receiving the laser beam reflected by an object. A final output distance provided to the user is L1.

As described with reference to FIGs. 5 and 6, the laser range finding apparatus may provide an alarm to the user and measure a distance when the inclination is less than the preset value in the automatic measurement mode.

A lower part (b) of FIG. 8 illustrates an example of a distance measured according to the one-way measurement mode including the length of the laser range finding apparatus when the inclination of the laser range finding apparatus is less than a preset value. A parameter "a" shown in the figure represents a distance between the center of the laser range finding apparatus and the object measured in a state in which the laser range finding apparatus is inclined. A parameter k shown in the figure represents a half of the total length of the laser range finding apparatus, that is, a length from the center point of the laser range finding apparatus to a right or left end (for example, an end at which a laser beam of a receiver configured to receive the laser beam (for example, the receiver of the first laser module 200) is received) of the laser range finding apparatus. A parameter L1 shown in the figure represents a distance measured by the laser range finding apparatus outputting a laser beam from one of the first laser module or the second laser module and receiving the laser beam reflected by an object. The parameter "a" shown in the figure is a sum of k and L1. However, in order to calculate an accurate distance that needs to be actually provided to the user, a distance a' from the center of the laser range finding apparatus to the object when the laser range finding apparatus is considered to be in a horizontal state is required. An inclination x according to the embodiments refers to an angle between a straight line corresponding to a distance from the center of the inclined laser range finding apparatus to the object w2 and a straight line corresponding to a distance from the center of the horizontal laser range finding apparatus to the object w2. The inclination x according to the embodiments may be secured by a sensor unit (for example, the sensor unit 420) of the laser range finding apparatus. The laser range finding apparatus may secure the inclination x and use the inclination x to calculate a value of a' according to an equation shown in the figure. A final output distance according to the embodiments may be expressed as a' - k (half the remaining length of the laser range finding apparatus).

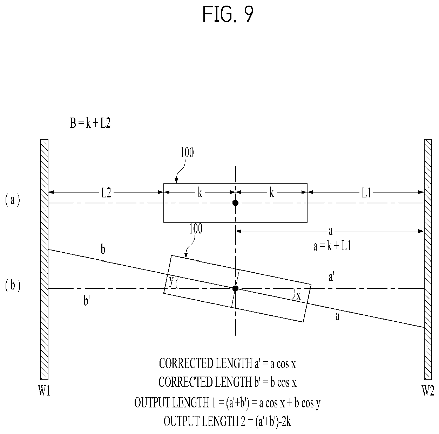

FIG. 9 illustrates a distance calculation operation of the laser range finding apparatus according to the embodiments.

FIG. 9 illustrates an operation of calculating a distance measured by the laser range finding apparatus according to the embodiments (for example, the laser range finding apparatus 100 described with reference to FIGs. 1 to 6) according to the two-way measurement mode.

An upper part (a) of FIG. 9 illustrates an example of a distance measured according to the two-way measurement mode in a state in which the laser range finding apparatus is horizontal. A parameter k shown in the figure represents a half of the total length of the laser range finding apparatus, that is, a length from the center point of the laser range finding apparatus to a right or left end (for example, an end at which a laser beam of a receiver configured to receive the laser beam (for example, the receiver of the first laser module 200) is received) of the laser range finding apparatus. A parameter L1 shown in the figure represents a distance measured by the laser range finding apparatus outputting a laser beam from the first laser module and receiving the laser beam reflected by an object. A parameter L2 shown in the figure represents a distance measured by the laser range finding apparatus outputting a laser beam from the second laser module and receiving the laser beam reflected by an object. A parameter "a" shown in the figure is a sum of k and L1, and a parameter b is a sum of k and L2. Therefore, a two-way distance including the length of the laser range finding apparatus is expressed as a + b, and a two-way distance excluding the length of the laser range finding apparatus is expressed as L1 + L2.

As described with reference to FIGs. 5 and 6, the laser range finding apparatus may provide an alarm to the user and measure a distance when the inclination is less than a preset value in the automatic measurement mode.

A lower part (b) of FIG. 9 illustrates an example of a distance measured according to the two-way measurement mode when the inclination of the laser range finding apparatus is less than the preset value. The parameters a and b shown in the figure represent distances from the center of the laser range finding apparatus to both objects w1 and w2, respectively, measured in a state in which the laser range finding apparatus is inclined. Values of a and b are calculated as described with reference to FIG. 9(a) . However, in order to calculate an accurate distance that needs to be provided to the user, distances a' and b' from the center of the laser range finding apparatus to the objects when the laser range finding apparatus is considered to be in a horizontal state are required. An inclination x according to the embodiments refers to an angle between a straight line corresponding to a distance from the center of the inclined laser range finding apparatus to the object w2 and a straight line corresponding to a distance from the center of the horizontal laser range finding apparatus to the object w2. An inclination y according to the embodiments refers to an angle between a straight line corresponding to a distance from the center of the inclined laser range finding apparatus to the object w1 and a straight line corresponding to a distance from the center of the horizontal laser range finding apparatus to the object w1. The inclinations x and y according to the embodiments may be the same or different from each other. The inclinations x and y according to the embodiments may be secured by the sensor unit (for example, the sensor unit 420) of the laser range finding apparatus. Therefore, the laser range finding apparatus may secure the inclinations x and y, and use the inclinations x and y to calculate values of a' and b, respectively, according to an equation shown in the figure. As shown in the figure, a two-way distance output length 1 including the length of the laser range finding apparatus is expressed as a' + b', and a two-way distance excluding the length of the laser range finding apparatus is expressed as a' + b'- 2k.

The equations described with reference to FIGs. 7 to 9 are merely examples and may be replaced with other possible equations for calculating and correcting the one-way and two-way distances. One or more programs that perform calculation operations corresponding to the equations according to the embodiments may be stored in the memory (for example, the memory 430) of the laser range finding apparatus, and may be performed by the controller 400 (for example, the processor 401 and the calculator 402) automatically or according to a user input signal.

Further, although not shown in the figure, the laser range finding apparatus according to the embodiments may calculate the area, the volume, etc. according to the measurement target. For example, to calculate the area of a rectangular shape, the laser range finding apparatus may measure a vertical length of the area and measure a horizontal length to calculate the area. In addition, to calculate the volume, the laser range finding apparatus according to the embodiments may secure the measured width, length, and height values of the measurement target (and/or a correction value obtained by correcting the inclination) to calculate the volume value. In addition, the laser range finding apparatus according to the embodiments may calculate various values such as a height and a hypotenuse when the measurement target is a right triangle using distance values measured and corrected one or more times. One or more programs that perform calculation operations according to the embodiments may be stored in the memory (for example, the memory 430) of the laser range finding apparatus, and may be performed by the controller 400 (or the processor 401 and the calculator 402) according to a user input signal or automatically.

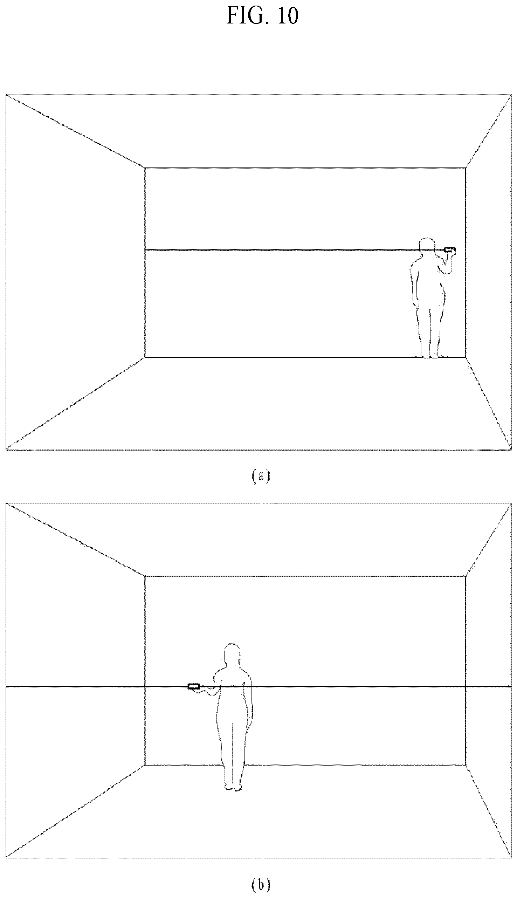

FIG. 10 illustrates an example of use of the laser range finding apparatus.

The laser range finding apparatus according to the embodiments may calculate not only a distance between two objects, but also the volume, the area, etc. Example (a) shown in the figure illustrates an example of performing conventional one-way laser range finding. As shown in the figure, in order to perform one-way laser range finding, the user may measure a distance by outputting a laser in an opposite direction from at least one object (for example, a wall surface, a floor surface, etc.).

In other words, in order to calculate the volume, the area, etc. in addition to the distance, the user needs to move several times and a point serving as a reference point for measurement needs to be clearly identified, which is disadvantageous. On the other hand, Example (b) shown in the figure illustrates an example of measuring a distance using the laser range finding apparatus according to the embodiments. The laser range finding apparatus according to the embodiments may measure a distance, the volume, etc. in a minimum number of times without changing a position of the user since the user is at a center of measurement at all times. That is, the laser range finding apparatus according to the embodiments may perform various calculations, and thus may calculate the one-way distance, calculate the two-way distance, and calculate the area, the volume, etc. without changing a position of the user.

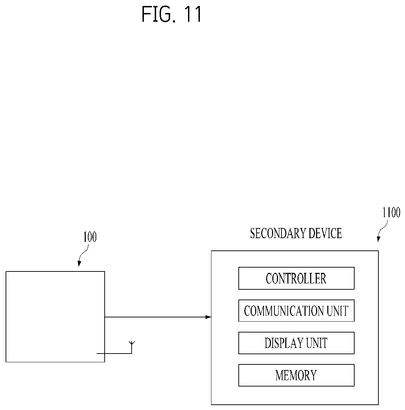

FIG. 11 illustrates a laser range finding system.

The laser range finding system 1100 according to the embodiments includes the laser range finding apparatus 100 described with reference to FIGs. 1 to 9 and a device capable of communicating with the laser range finding apparatus (for example, a smartphone, a PC, a tablet computer, etc., hereinafter referred to as secondary device for convenience). In the figure, a single communication capable device is shown for convenience of description. However, this is only an example, and the laser range finding apparatus 100 may communicate simultaneously or continuously with one or more secondary devices. The secondary device according to the embodiments may include one or more signal processing and/or application-specific integrated circuits and may be implemented as hardware, software, or a combination of both hardware and software. The secondary device according to the embodiments includes a communication unit capable of communicating with the laser range finding apparatus, a memory configured to store a program capable of receiving data from the laser range finding apparatus, an application, etc., a controller configured to execute a program stored in the memory, and a display. The memory according to the embodiments may store one or more programs including instructions for executing an application. The controller according to the embodiments may include one or more processors. One or more programs are executed by the one or more processors. Instructions for executing an application according to the embodiments may perform various functions such as a measurement function and a sketch function of the application described later, and may display an interactive user interface. When the application is executed, the secondary device may provide a user interface allowing interaction with the laser range finding apparatus 100 through a display. The user interface includes visual output of data received from the laser range finding apparatus, information provided based on the received data, content, and a menu for receiving user input signals, etc. Visual output includes images, text, graphics, video, and combinations thereof. The secondary device may receive a signal input by the user to control the operations and/or functions (for example, the operations and/or functions described with reference to FIG. 9) of the laser range finding apparatus 100. For example, the operations and/or functions of the laser range finding apparatus described with reference to FIGs. 1 to 9 are provided as a user interface through the display of the secondary device. For example, upon receiving a signal input by the user to turn off the power of the laser range finding apparatus 100, the secondary device may transmit the user input signal to the laser range finding apparatus 100 to turn off the power of the laser range finding apparatus 100. In addition, the secondary device (for example, one or more processors) receives a measured value (for example, a measured distance, etc.) from the laser range finding apparatus 100, directly performs distance and area calculations, operations, etc., and provides results to the user. In addition, the secondary device may additionally calculate and/or measure various information based on data to be calculated by the laser range finding apparatus 100 (for example, a distance between objects, volume, area, etc.) and provide resultant values to the user. In addition, the secondary device may receive the results in the automatic measurement mode described with reference to FIGs. 5 and 6, and provide the user with an alarm in the automatic measurement mode (for example, visual, auditory, and tactile output indicating that the inclination of the laser range finding apparatus 100 is less than the preset value).

Various components of the apparatus according to the embodiments may be configured by hardware, software, firmware, or a combination thereof. Various components of the embodiments may be implemented as one chip, for example, one hardware circuit. Depending on the embodiments, the components according to the embodiments may be implemented as separate chips, respectively. Depending on the embodiments, at least one or more of the components of the apparatus according to the embodiments may include one or more processors capable of executing one or more programs, and the one or more programs may execute one or more of the operations/methods according to the embodiments or include instructions for execution. Executable instructions for performing the methods/operations of the apparatus according to the embodiments may be stored in a non-transitory CRM or other computer program products configured for execution by one or more processors, or may be stored in a transitory CRM or other computer program products configured for execution by one or more processors. In addition, the memory according to the embodiments may be used as a concept including not only a volatile memory (for example, a RAM, etc.) but also a nonvolatile memory, a flash memory, a PROM, etc. In addition, implementation in the form of a carrier wave such as transmission over the Internet may be included. In addition, the processor-readable recording medium may be distributed to computer systems connected by a network, so that processor-readable code may be stored and executed in a distributed manner.

Although not shown in the figure, the laser range finding system 1100 may further include a server. The laser range finding apparatus may transmit measured data (distance, volume, area, etc.) to the server. The server may receive and manage the measured data. Since the server receives data from one or more laser range finding apparatuses, the server may store and manage data for each laser range finding apparatus or analyze the stored data based on an identifier for identifying each laser range finding apparatus. A configuration of the laser range finding system 1100 shown in the figure is only an example and may be changed.

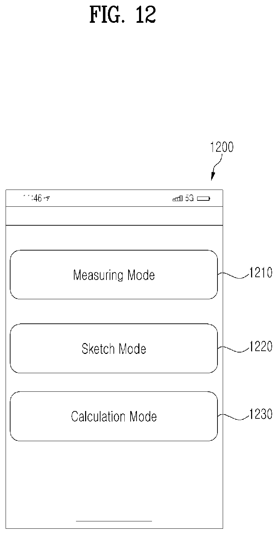

FIG. 12 is an example of a user interface provided by the secondary device.

When an application is executed as described above, the secondary device may provide a user interface 1200 allowing interaction with the laser range finding apparatus (for example, the laser range finding apparatus 100 described with reference to FIGs. 1 to 9) through the display. The user interface 1200 includes visual output of data received from the laser range finding apparatus, information provided based on the received data, content, and a menu for receiving user input signals.

The application stored in the secondary device performs operations according to the measurement mode 1210, a sketch mode 1220, and a calculation mode 1230 based on a measurement value received from the laser range finding apparatus.

The measurement mode 1210 is a mode for controlling the functions and/or operations of the laser range finding apparatus. According to a signal input by the user to select the measurement mode, the secondary device may display a user interface related to the functions and/or operations of the laser range finding apparatus.

The sketch mode 1220 is a mode for generating or correcting an image for an object that needs to be measured or has been measured (for example, furniture, indoor space, etc.). The secondary device may display a user interface for sketching according to a signal input by the user to select the sketch mode. The user interface for the sketch mode according to the embodiments includes a grid-shaped image.

The calculation mode 1230 is a mode for calculating the area of a space based on data received by the laser range finding apparatus. According to a signal input by the user to select the calculation mode, the secondary device may display a user interface that displays one or more functions of an application according to the calculation mode or displays a calculated result value.

The example 1200 shown in the figure represents an example of information on the measurement mode 1210, the sketch mode 1220, and the calculation mode 1230 and a user interface for user interaction. The user interface 1200 may include images, icons, etc. corresponding to each mode so that each mode may be distinguished, or may include a list, menu, etc. Each mode is selected according to a user input signal.

The names and numbers of modes shown in the figure are merely examples and are not limited to the present embodiments.

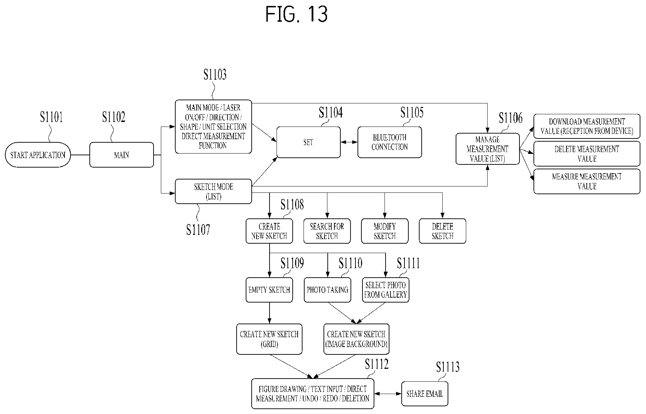

FIG. 13 is a flow diagram illustrating an operation of the secondary device.

As described above, when an application is executed in step S1101, in step S1102, the secondary device may provide a user interface allowing interaction with the laser range finding apparatus through the display. The secondary device provides a user interface (main) that allows selection of the measurement mode and the sketch mode. For example, the secondary device may output icons corresponding to the measurement mode and the sketch mode. In addition, steps S1103 to S1113, which will be described later, may be performed selectively, or at least one step may be simultaneously performed.

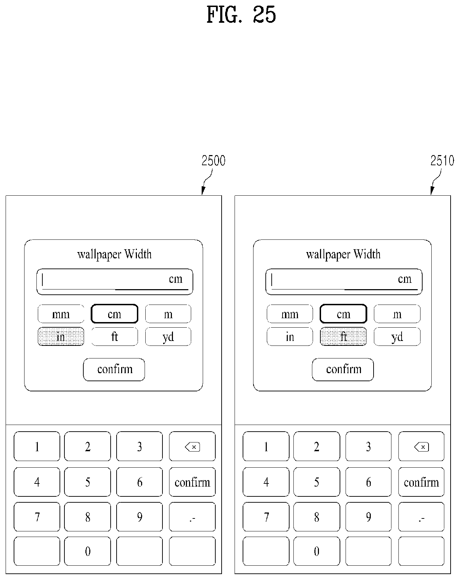

In step S1103, when a signal input by the user to select the measurement mode is received, the secondary device provides a user interface for selection/deletion of the operations and/or functions of the laser range finding apparatus (for example, the operations and/or functions described with reference to FIG. 3, such as laser on/off, direction, shape, unit selection, change, measurement start, etc.). More specifically, the secondary device may output laser on/off icons, laser direction icons, laser shape icons, unit selection icons, measurement start icons, etc. through the display. Accordingly, the secondary device may receive a signal to select an icon from the user and perform a corresponding operation and/or function based on the received signal. In addition, the measurement mode will be described in detail with reference to FIG. 25.

In addition, in step S1104, the secondary device may output a settings icon after the measurement mode is selected. The secondary device may set the modules and/or functions of the laser range finding apparatus through communication with the laser range finding apparatus. To this end, the secondary device may provide a settings icon.

In step S1105, when the secondary device receives a signal to select a setting icon output from the user, the secondary device performs Bluetooth communication to allow communication with the laser range finding apparatus, and transmits a signal to select/control a function of the laser range finding apparatus. In this instance, it is only an embodiment that the secondary device performs Bluetooth communication with the laser range finding apparatus when the settings icon is selected. It is obvious that, when the settings icon is selected, the secondary device may perform other operations to control the laser range finding apparatus.

In step S1106, the measurement mode of the application according to the embodiments further includes a measurement value management function. The values measured by the laser range finding apparatus may be displayed in a list form. The measurement value management function includes a function of modifying a measurement value, downloading a measurement value from the laser range finding apparatus, or deleting a measurement value. The secondary device may output a measurement value modification icon, a measurement value download icon, and a measurement value deletion icon, respectively. The secondary device may display measured values in a list form and simultaneously output the measurement value modification icon, the measurement value download icon, and the measurement value deletion icon. Meanwhile, the secondary device displays measured values in a list form, and when there is additional input from the user, the measurement value modification icon, the measurement value download icon, and the measurement value deletion icon may be additionally output. Thereafter, the secondary device may provide a user interface indicating each function according to a user input signal.

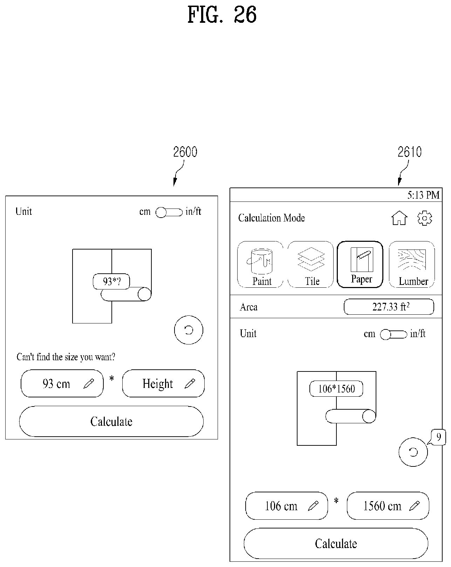

In step S1107, when a signal input by the user to select the sketch mode is input, the secondary device displays a user interface indicating a sketch mode function of the application. In this instance, the secondary device may perform steps S1104 to S1106 even when a signal input by the user to select the sketch mode is received. Accordingly, even when the sketch mode is executed, the secondary device may output icons for performing steps S1104 to S1106. In addition, the sketch mode will be described in detail with reference to FIG. 26.

Functions of the sketch mode of the application according to the embodiments include creating a new sketch, searching for a sketch, modifying a sketch name, and deleting a sketch. Accordingly, the secondary device may output a sketch creation icon, a sketch search icon, a sketch name modification icon, and a sketch deletion icon.

In step S1108, the secondary device may output an empty sketch icon, a photo taking icon, and an icon for selecting a photo from a gallery according to a signal input by the user to select the sketch creation icon. That is, in the sketch mode, the secondary device may output an empty sketch as a background screen for sketching, output a photo taken through a camera of the secondary device, or output a photo selected from the gallery.

In step S1109, upon receiving a signal to select an empty sketch icon, the secondary device may create an empty sketch in a grid form as a background screen in the sketch mode.

In step S1110, upon receiving a signal to select the photo taking icon, the secondary device may execute a camera application to take a photo using the camera of the secondary device, and use the taken photo as a background for the sketch.

In step S1111, upon receiving a signal to select the photo selection icon from the gallery, the secondary device may execute a gallery application and use the selected photo as a background for the sketch according to a signal input by the user to select one of photos included in the gallery application.

After the background of the sketch is determined through steps S1109 to S1111, the secondary device may output various icons for performing the sketch in step S1112. For example, the secondary device may output a figure drawing icon, a text input icon, a direct measurement icon, an undo icon, a redo icon, a deletion icon, etc. The secondary device may perform a sketching task based on a signal input by the user to select each icon. For example, the user may draw a shape or input text using a taken photo as a background. Thereafter, the secondary device may store a sketched file. To this end, the secondary device may additionally output a storage icon.

In step S1113, the secondary device may externally share the created or stored sketch file. The secondary device may additionally print a share icon when the sketch file is stored. The secondary device may externally share the sketch file according to a signal input by the user to select the share icon. In addition, the secondary device may output a list of other applications that may be shared according to a signal input by the user to select the share icon. The secondary device may transmit the sketch file to the selected application based on a signal input by the user to select one application from a list of other sharable applications.

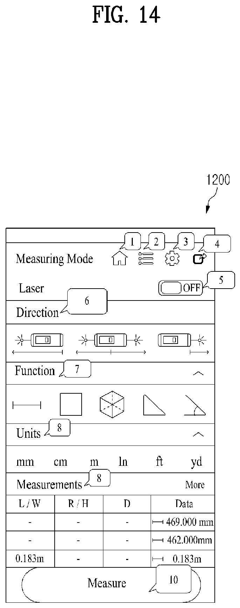

FIG. 14 is an example of a user interface indicating the measurement mode according to the embodiments.

A user interface 1400 indicating the measurement mode includes visual output such as one or more images, icons, menus, etc. for controlling the functions and/or operations of the laser range finding apparatus. Images and icons shown in the figure are only examples, and locations, sizes, etc. thereof may be changed. Each number shown in the figure represents the following function. The user interface shown in the figure includes the following elements.

1. Home: According to a signal input by the user to select a home element, the secondary device displays an initial interface of an application.
2. Measurement value management: This is a function for managing a measurement value received from the laser range finding apparatus or a measurement value stored in the laser range finding apparatus.
3. Settings: This is a function of managing overall application settings.
4. Export: This is a function for transmitting a value measured in an application via an email or other communication means.
5. Laser On/Off: This indicates a function of controlling transmission and reception of laser output of the laser range finding apparatus (for example, the laser range finding apparatus 100 described with reference to FIGs. 1 to 9).
6. Measurement method selection (direction): This indicates the one-way measurement mode including the length of the laser range finding apparatus, the two-way measurement mode including the length of the laser range finding apparatus, and the one-way measurement mode excluding the length of the laser range finding apparatus described with reference to FIGs. 1 to 9.
7. Measurement mode selection (function): This is a function capable of selecting a measurement target such as a distance, volume, angle, etc.
8. Unit selection (units): This is a function capable of selecting measurement units (mm, cm, etc.)
9. Measurement result value list (measurements): This is a list indicating received measurement values in the laser range finding apparatus or a list indicating selected measurement values in the measurement mode.
10. New measurement (measure): This is a function capable of commanding a new measurement operation of the laser range finding apparatus.

Icons, images, etc. selected according to user input signals (for example, a touch gesture, etc.) may be displayed in different colors, and the application performs the corresponding function. FIG. 14 is only an example, and the user interface indicating the measurement mode is not limited to this example.

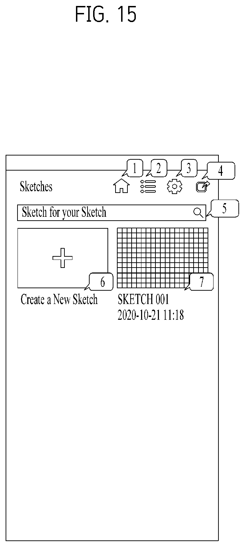

FIG. 15 is an example of a user interface indicating the sketch mode according to the embodiments.

A user interface 1500 indicating the sketch mode includes visual output such as one or more images, icons, menus, etc. indicating the sketch mode function of the application. The application performs functions such as creating a new sketch, searching for a sketch, modifying a sketch name, and deleting a sketch according to user input signals. Images, icons, etc. shown in the figure are only examples, and locations, sizes, etc. thereof may be changed. Each number shown in the figure represents the following function. The user interface shown in the figure includes the following elements.

1. Home: According to a signal input by the user to select a home element, the secondary device may display an initial interface of an application.
2. Measurement value management: This is a function for managing a measurement value received from the laser range finding apparatus or a measurement value stored in the laser range finding apparatus.
3. Settings: This is a function of managing overall application settings.
4. Export: This is a function for transmitting a value measured in an application via an email or other communication means.
5. Sketch search: This is a function for importing or searching for stored sketch data.
6. New sketch creation: This is a function for creating a new sketch. As described above, the new sketch may be provided as a grid-shaped image.

7. Existing sketch selection: This is a function for selecting a stored sketch.

Icons, images, etc. selected according to user input signals may be displayed in different colors, and the application performs the corresponding function. FIG. 15 is only an example, and the user interface indicating the sketch mode is not limited to this example.

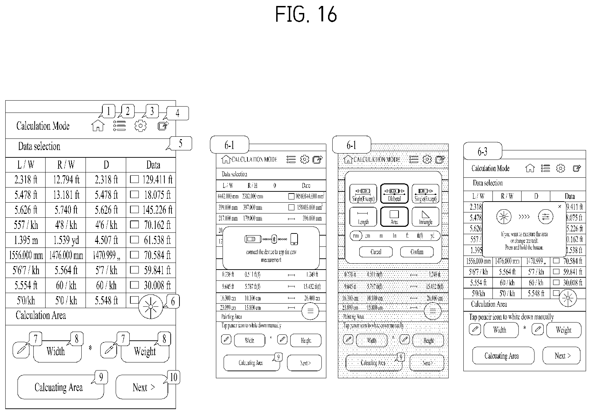

FIG. 16 is an example of a user interface indicating the calculation mode according to the embodiments.

The calculation mode is a mode for calculating the area of a space based on data received by the laser range finding apparatus. A user interface 1600 indicating the calculation mode includes visual output such as one or more images, icons, menus, etc. indicating one or more functions according to the calculation mode function of the application. The application performs functions such as area calculation, etc. according to user input signals. Images, icons, etc. shown in the figure are only examples, and locations, sizes, etc. thereof may be changed. Each number shown in the figure represents the following function.

The user interface shown on the left side of the figure includes the following elements.

1. Home: According to a user input signal, the secondary device displays an initial interface of an application.

2. Measurement value management: This is a function for managing a measurement value received from the laser range finding apparatus or a measurement value stored in the laser range finding apparatus.

3. Settings: This is a function for managing overall application settings.

4. Export: This is a function for transmitting a value measured in an application via an email or other communication means.

5. Data selection list: A data selection list includes existing measurement data values and items from which data values may be selected. The list according to the embodiments includes a type of data (for example, length, height, area, volume) and the corresponding values. According to a user input signal, selected data is displayed simultaneously or continuously upon selection in a data display box at a bottom.

6. New measurement: This is a function for commanding range finding of the laser range finding apparatus. When a user input signal (for example, a touch gesture) is input for a shorter time than a preset time (short touch), the secondary device transmits a signal commanding the laser range finding apparatus to measure a new distance. When a user input signal is input longer than the preset time (long press), a user interface for new measurement settings is displayed.

When Bluetooth connection is not established, a user interface 6-1 for new measurement settings includes visual output including a message and/or an image indicating that Bluetooth connection is not established. When Bluetooth connection is established, a user interface (6-2) for new measurement settings shown in the figure is provided. The user interface (6-2) for new measurement settings further includes visual output including a message and/or a message indicating information for new measurement (for example, driving of at least one of the first laser module or the second laser module, measurement targets (distance, area, etc.), and measurement units), an image for measurement command, an icon, etc. According to at least one signal input by the user to select information for new measurement and a measurement command, the secondary device transmits a signal commanding a measurement function of the laser range finding apparatus. When new measurement data is received, the new measurement data is automatically added to the data selection list and displayed.

7. Manual input: The application performs a manual input function of receiving input of data from the user when there is no measured data or when the user desires to directly input length and height data of the measurement target even if there is measured data. A user interface indicating that the manual function is activated may be displayed in an icon form. An icon indicating that the manual function is activated may be created and popped up according to a user input signal (for example, a data selection list at the top, and a touch gesture in another space of the user interface other than a new measurement icon). In addition, when the manual function is not activated, a user interface indicating that manual input is not activated is displayed. The user interface indicating that manual input is not activated may be displayed in an icon form (for example, x form), and is not displayed according to a signal input by the user to touch the icon.

8. Data display: Selected measurement data and/or data input from the user (width and height) are displayed. Data display includes an image (or icon) indicating that some functions are deactivated according to an item and a value of measurement data selected from a data list.

9. Area calculation: An area value calculated based on the displayed data (8) is displayed. When a user input signal selects an area value from a data list, the selected area value may be displayed simultaneously or continuously upon selection.

10. Next: A command is given to perform a function corresponding to a next step.

A user interface 6-3 shown on the right side of the figure includes visual output indicating a message and/or an image for a method of using the calculation mode when the application is first run.

Icons, images, etc. selected according to user input signals may be displayed in different colors, and the application performs the corresponding function. FIG. 16 is only an example, and the user interface indicating the calculation mode is not limited to this example.

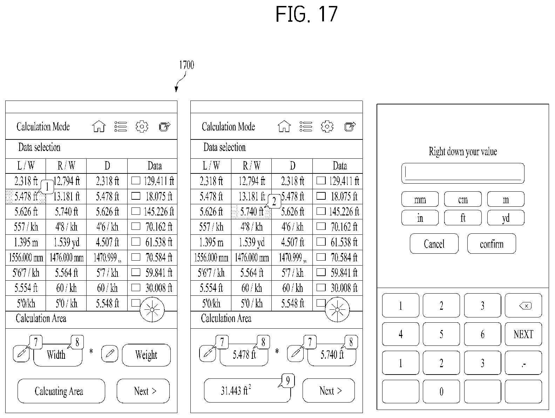

FIG. 17 is an example of a user interface indicating the calculation mode according to the embodiments.

A user interface 1700 in the figure represents an example of a user interface including measurement data (1) selected according to a user input signal as described with reference to FIG. 16. The user interface 1700 includes a width value displayed in a width item (8) of a data display according to a signal input by the user to select the width value in a data list. Since the measurement width value is elected, a manual input function (7) for the width item is deactivated. Therefore, the user interface includes an icon (for example, an x form) indicating that a manual input function corresponding to a width is deactivated.

A user interface 1710 shown in a center of the figure represents an example of a user interface including a height value displayed in a height item of a data display according to a signal input by the user to select the height value in a data list after a width value is selected. Since the measured height value is selected (2), a manual input function for the height item (7) is deactivated. Therefore, the user interface includes an icon (for example, x form) indicating that the manual function corresponding to the height is deactivated.

In addition, since a length value and a height value are selected, the user interface 1710 includes an automatically calculated area value (9). The area value is calculated simultaneously with selection of a value selected later among the length value and the height value or continuously, and displayed.

A user interface 1720 shown on the right side of the figure is an example of a user interface representing manual input. The user interface may include a number pad for entering numbers, one or more selectable units of measurement, and one or more icons representing confirmation.

Icons, images, etc. selected according to user input signals may be displayed in different colors, and the application performs the corresponding function. FIG. 17 is only an example, and the user interface indicating the calculation mode is not limited to this example.

Applications according to the embodiments may perform calculation functions for utilizing one or more various materials. The one or more various materials according to the embodiments may include paint, tile, wallpaper, and lumber, but are not limited to these examples. The applications according to the embodiments may calculate and provide the number of materials used, frequency of use, etc. based on the calculated width value, height value, area value, etc. according to characteristics of the materials.

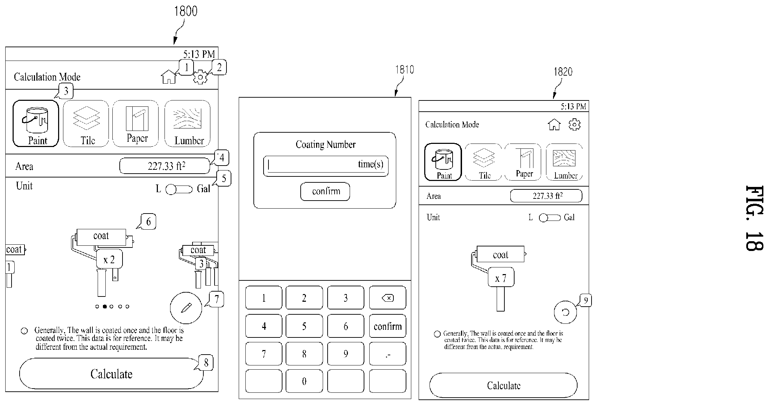

FIG. 18 is an example of a user interface indicating the calculation mode according to the embodiments.

FIG. 18 is an example of a user interface indicating the calculation mode according to a signal input by the user to select paint as a material.

A user interface 1800 shown on the left side of the figure represents an example of a user interface in the calculation mode according to a signal input by the user to select paint. The calculation mode according to the signal input by the user to select paint is a function for calculating the area of a space based on data received from the laser range finding apparatus and calculating the expected amount of paint usage according to the calculation value. The user interface 1800 representing the calculation mode includes visual output such as one or more images, icons, menus, etc. representing paint capacity units, number of coats, etc. The images, icons, etc. shown in the figure are only examples, and locations, sizes, etc. thereof may be changed. Each number shown in the figure represents the following function.

The user interface 1800 shown on the left includes the following elements.

1. Home: According to a signal input by the user to select a home element, the secondary device may display an initial interface of an application.
2. Settings: This indicates a function for managing overall application settings.
3. Paint calculation mode selection: An icon, an image, etc. indicating each material is displayed so that a calculation mode for at least one material among one or more materials may be selected. According to a signal input by the user to select a calculation mode for paint, icons, images, etc. indicating calculation modes for other materials may be deactivated.
4. Area calculation value of previous page (Area): The area value (or area calculation value) described with reference to FIGs. 16 and 17 is displayed.
5. Unit selection (Unit) : This is expressed as a toggle bar. However, the embodiments are not limited to this example. The capacity (volume) unit of the paint includes at least one of L or Gal. L or Gal may be selected according to a user input signal.
6. Number-of-coats selection window: This may include one or more icons or images indicating the number of coats of paint. For example, a plurality of icons is displayed, such as an icon corresponding to the number of coats being 1 and an icon corresponding to the number of coats being 2. As icons according to the embodiments, five icons (or images) representing the number of coats from 1 to 5, respectively, may be displayed. At least one icon may be displayed together or separately, and an icon selected according to the user input signal (for example, a gesture such as a double tap) is located in the center and displayed in a larger size than sizes of icons located on both sides. Moving and changing of the icon is performed according to a slice gesture of the user. Each icon may be displayed together with a number indicating the number of times. In addition, the selected number of coats is immediately stored for calculation of the amount of paint usage.

7. Manual input of number of coats: This indicates a manual input function for the number of coats. The manual input function for the number of coats indicates a function of receiving the number of coats from the user when the user selects a number of coats greater than five. When the manual input function for the number of coats is selected according to a user input signal, a user interface 1820 for manual input of the number of coats shown in the center of the figure is displayed. A user interface 1920 for manual input of the number of coats includes an element for inputting numbers and a confirmation element. When the number of coats is input from the user (a value greater than 5), a user interface 1830 including a number and an icon representing the number of coats manually input by the user is displayed, as shown on the right side of the figure. The user interface 1830 may include an icon (9) for modifying the number of coats manually input or canceling the manual input function for the number of coats.

8. Calculate execution button: This indicates a calculation execution function for calculating the amount of paint usage based on the previously calculated area value and the number of coats selected according to a user input signal. When the calculation execution function is selected according to the user input signal, an application performs calculation based on the area value and number of coats.

Icons, images, etc. selected according to user input signals may be displayed in different colors, and the application performs the corresponding function. FIG. 18 is only an example, and the user interface indicating the calculation mode is not limited to this example.

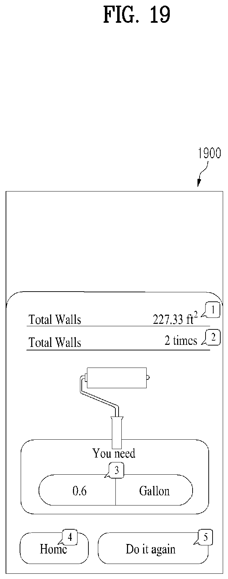

FIG. 19 is an example of a user interface indicating the calculation mode according to the embodiments.

A user interface 1900 of FIG. 19 is an example of a user interface indicating a result value obtained by performing the calculation mode according to a signal input by the user to select paint as a material.

The user interface shown in the figure includes the following elements.

1. Area calculation value (Total walls): A preselected (or stored) area calculation value is displayed.
2. Setting of the number of coats: The number of coats according to the user input signal described with reference to FIG. 18 (selection or manual input of 1 to 5 times) is displayed.
4. Result value according to formula calculation: A result value according to formula calculation is displayed. The result value is displayed in units selected according to the user input signal described with reference to FIG. 18.
5. Home: This indicates a function for displaying an initial user interface of an application.
6. Recalculation (Do it again): This indicates a function for performing recalculation by correcting the area value and number of coats described with reference to FIG. 18. When a user input signal selects the recalculation function, an initial user interface of the calculation mode is displayed.

Icons, images, etc. selected according to user input signals may be displayed in different colors, and the application performs the corresponding function. FIG. 19 is only an example, and the user interface indicating the calculation mode is not limited to this example.

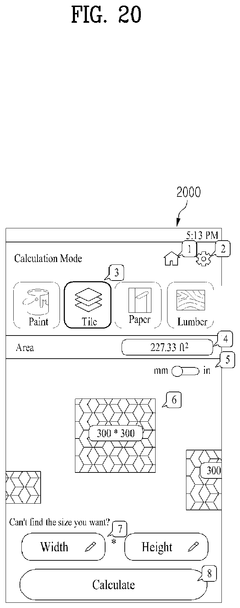

FIG. 20 is an example of a user interface indicating the calculation mode according to the embodiments.
A user interface 2000 shown in FIG. 20 is an example of a user interface indicating the calculation mode according to a signal input by the user to select a tile as a material.
The calculation mode according to the signal input by the user to select a tile is a function for calculating the area of a space based on data received from the laser range finding apparatus and calculating the expected usage (number) of tiles according to the calculation value. The user interface representing the calculation mode includes visual output, such as one or more images, icons, menus, etc., indicating tile sizes, units, etc. The images, icons, etc. shown in the figure are only examples, and locations, sizes, etc. thereof may be changed. Each number shown in the figure represents the following function.
The user interface 2000 shown on the left includes the following elements.

1. Home: According to a signal input by the user to select a home element, the secondary device may display an initial interface of an application.
2. Settings: This indicates a function of managing overall application settings.
3. Tile calculation mode selection: An icon, an image, etc. indicating each material is displayed so that a calculation mode for at least one material among one or more materials may be selected. According to a signal input by the user to select a calculation mode for a tile, icons, images, etc. indicating calculation modes for other materials may be deactivated.
4. Area calculation value of previous page (Area): The area value (or area calculation value described with reference to FIGs. 16 and 17) is displayed.
5. Unit selection (Unit): This is expressed as a toggle bar. However, the embodiments are not limited to this example. The size unit of the tile includes at least one of mm or inch. mm or inch may be selected according to a user input signal.

6. Tile standard selection window: This may include one or more icons or images representing a tile standard. For example, tile standards having different horizontal and vertical sizes are displayed as individual icons (or images). In the embodiments, a tile standard selection window includes at least one icon each representing at least one tile standard. At least one icon may be displayed together or separately, and an icon selected according to a user input signal (for example, a gesture such as a double tap) is located in the center and displayed in a larger size than sizes of icons located on both sides. In addition, the selected icon may be animated and displayed. Moving and changing the icon is performed according to a slice gesture of the user. Each icon may be displayed together with a number indicating a standard. In addition, the selected tile standard value is immediately stored for calculation of the amount of tile usage. In addition, the tile standard value (width and height of the tile) is displayed in a data display element at the bottom simultaneously or continuously upon selection.

7. Manual input of tile standard: This indicates a manual input function for a tile standard. A tile standard manual input function refers to a function of receiving, from the user, input of a tile standard rather than a default setting standard.

8. Calculation execution button: This indicates a calculation execution function for calculating the amount of tile usage based on a pre-calculated area value and a tile standard selected according to a user input signal. When the calculation execution function is selected according to the user input signal, an application performs calculation based on the area value and the tile standard.

Icons, images, etc. selected according to user input signals may be displayed in different colors, and the application performs the corresponding function. FIG. 20 is only an example, and the user interface indicating the calculation mode is not limited to this example.

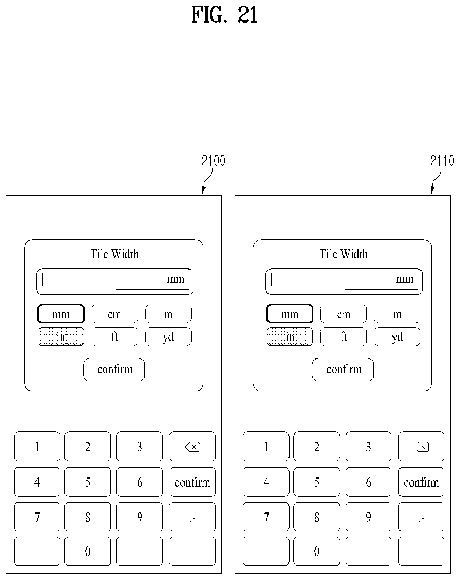

FIG. 21 is an example of a user interface for manual input of a tile standard.

The user interface of FIG. 21 is an example of a user interface for manual input of a tile standard displayed when the tile standard manual input function is selected according to the user input signal described with reference to FIG. 20. The user interface for manual input of a tile standard includes an element for receiving input of a tile standard, that is, width and height values, an element for initializing and resetting a set unit, and a confirmation element. When a unit is selected according to a user input signal, other unselected units are deactivated. A user interface 2100 shown on the left side of the figure is an example of a user interface for reception of a width value and a unit, and a user interface 2110 shown on the right side of the figure is an example of a user interface for reception of a height value and a unit. The user interface 2100 for receiving a width value and a unit may be displayed first, and then the user interface 2110 for receiving a height value and a unit may be displayed. However, the order may be changed. When the user interface 2100 for receiving input of a width value and a unit is displayed first and a width value and a unit are input, the user interface 2111 for receiving input of a height value and a unit includes a unit set when the width value is input, and elements indicating other unset units are inactivate.

Icons, images, etc. selected according to user input signals may be displayed in different colors, and the application performs the corresponding function. FIG. 21 is only an example, and the user interface for manual input of a tile standard is not limited to this example.

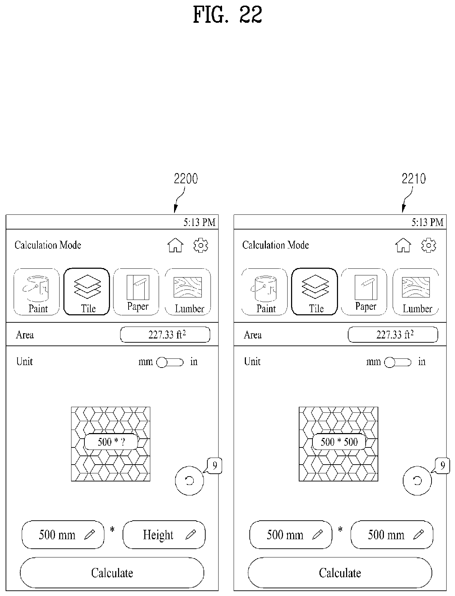

FIG. 22 is an example of a user interface for manual input of a tile standard.

The user interface shown in FIG. 22 is an example of a user interface including a number and an icon representing a manually input tile standard of the user displayed when the tile standard is input by the user. The user interface may include an icon (9) for modifying the manually input tile standard or canceling a tile standard manual input function. A user interface 2200 shown on the left side of the figure illustrates an example of a user interface including a number and an icon representing a manually input tile standard of the user when only a width value and a unit are input. A user interface 2210 shown on the right side of the figure illustrates an example of a user interface including a number and an icon representing a manually input tile standard of the user when a width value and a unit are input and then a height value and a unit are input.

Icons, images, etc. selected according to user input signals may be displayed in different colors, and the application performs the corresponding function. FIG. 22 is only an example, and the user interface for manual input of a tile standard is not limited to this example.

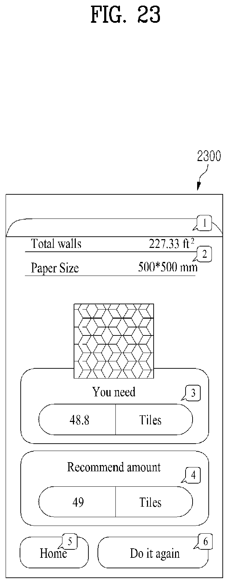

FIG. 23 is an example of a user interface indicating the calculation mode according to the embodiments.

A user interface 2300 shown in FIG. 23 is an example of a user interface that displays a result value by performing the calculation mode according to a signal input by the user to select a tile as a material.

The user interface 2300 shown in the figure includes the following elements.

1. Area calculation value (Total walls): A preselected (or stored) area calculation value is displayed.

2. Tile standard setting (Total size): A tile standard (selected tile standard or manually input tile standard) according to the user input signal described with reference to FIGs. 20 to 22 is displayed.

3. Result value according to formula calculation (You need): A result value according to formula calculation is displayed. The result value is displayed in units selected according to the user input signal described with reference to FIGs. 20 to 22.

4. Recommended calculation value (Recommended amount): When a result value is not an integer, a recommended calculation value calculated based on the result value is displayed.

5. Home: This indicates a function for displaying an initial user interface of an application.

6. Recalculation (Do it again): This indicates a function for recalculating the area value and the calculation value described with reference to FIGs. 20 to 22. When a user input signal selects the recalculation function, an initial user interface of the calculation mode is displayed.

Icons, images, etc. selected according to user input signals may be displayed in different colors, and the application performs the corresponding function. FIG. 23 is only an example, and the user interface indicating the calculation mode is not limited to this example.

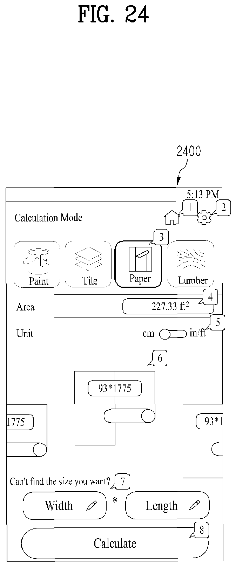

FIG. 24 is an example of a user interface indicating the calculation mode according to the embodiments.

A user interface 2400 shown in FIG. 24 is an example of a user interface indicating the calculation mode according to a signal input by the user to select wallpaper as a material.

The calculation mode according to the signal input by the user to select wallpaper is a function for calculating the area of a space based on data received from the laser range finding apparatus and calculating the expected amount of usage (size) of wallpaper according to a calculation value. A user interface representing the calculation mode includes visual output, such as one or more images, icons, menus, etc., representing sizes, units, etc. that can be used when attaching wallpaper to a wall. The images, icons, etc. shown in the figure are only examples, and locations, sizes, etc. thereof may be changed. Each number shown in the figure represents the following function.

The user interface shown on the left includes the following elements.

1. Home: The secondary device may display an initial interface of an application according to a signal input by the user to select a home element.

2. Settings: This indicates a function for managing overall application settings.

3. Wallpaper calculation mode: An icon, an image, etc. representing each material are displayed so that the calculation mode for at least one material among one or more materials may be selected. According to a signal input by the user to select the calculation mode for wallpaper, icons, images, etc. representing calculation modes for other materials may be deactivated.

4. Area calculation value of previous page (Area): The area calculation value (or area calculation value described with reference to FIGs. 16 and 17) is displayed.

5. Unit selection (Unit) : This is expressed as a toggle bar. However, the embodiments are not limited to this example. The size unit of the wallpaper includes at least one of cm or in/ft. cm or in/ft may be selected according to a user input signal.

6. Wallpaper standard selection: This may include one or more icons or images representing a wallpaper standard. For example, wallpaper standards having different horizontal and vertical sizes are displayed as individual icons (or images). In the embodiments, a wallpaper standard selection window includes at least one icon each representing at least one wallpaper standard. At least one icon may be displayed together or separately, and an icon selected according to a user input signal (for example, a gesture such as a double tap) is located in the center and displayed in a larger size than sizes of icons located on both sides. In addition, the selected icon may be animated and displayed. Moving and changing the icon is performed according to a slice gesture of the user. Each icon may be displayed together with a number indicating a standard. In addition, the selected wallpaper standard value is immediately stored for calculation of the amount of wallpaper usage. In addition, the wallpaper standard value (width and height of the wallpaper) is displayed in a data display element at the bottom simultaneously or continuously upon selection.

7. Manual input of wallpaper standard: This indicates a manual input function for a wallpaper standard. A wallpaper standard manual input function refers to a function of receiving, from the user, input of a wallpaper standard (width and length) rather than a default setting standard.

8. Calculation execution button: This indicates a calculation execution function for calculating the amount of wallpaper usage based on a pre-calculated area value and a wallpaper standard selected according to a user input signal. When the calculation execution function is selected according to the user input signal, an application performs calculation based on the area value and the wallpaper standard.

Icons, images, etc. selected according to user input signals may be displayed in different colors, and the application performs the corresponding function. FIG. 24 is only an example, and the user interface indicating the calculation mode is not limited to this example.

FIG. 25 is an example of a user interface for manual input of a wallpaper standard.

The user interface of FIG. 25 is an example of a user interface for manual input of a wallpaper standard displayed when the wallpaper standard manual input function is selected according to the user input signal described with reference to FIG. 24. The user interface for manual input of a wallpaper standard includes an element for receiving input of a wallpaper standard, that is, width and height values, an element for initializing and resetting a set unit, and a confirmation element. When a unit is selected according to a user input signal, other unselected units are deactivated. A user interface 2500 shown on the left side of the figure is an example of a user interface for reception of a width value and a unit, and a user interface 2510 shown on the right side of the figure is an example of a user interface for reception of a height (or length) value and a unit. The user interface 2500 for receiving a width value and a unit may be displayed first, and then the user interface 2510 for receiving a height value and a unit may be displayed. However, the order may be changed. When the user interface 2500 for receiving input of a width value and a unit is displayed first and a width value and a unit are input, the user interface 2511 for receiving input of a height value and a unit includes a unit set when the width value is input, and elements indicating other unset units are inactivate.

Icons, images, etc. selected according to user input signals may be displayed in different colors, and the application performs the corresponding function. FIG. 25 is only an example, and the user interface for manual input of a wallpaper standard is not limited to this example.

FIG. 26 is an example of a user interface for manual input of a wallpaper standard.

The user interface shown in FIG. 26 is an example of a user interface including a number and an icon representing a manually input wallpaper standard of the user displayed when the wallpaper standard is input by the user.

The user interface may include an icon (9) for modifying the manually input wallpaper standard or canceling a wallpaper standard manual input function. A user interface 2600 shown on the left side of the figure illustrates an example of a user interface including a number and an icon representing a manually input wallpaper standard of the user when only a width value and a unit are input. A user interface 2610 shown on the right side of the figure illustrates an example of a user interface including a number and an icon representing a manually input wallpaper standard of the user when a width value and a unit are input and then a length value and a unit are input.

Icons, images, etc. selected according to user input signals may be displayed in different colors, and the application performs the corresponding function. FIG. 26 is only an example, and the user interface for manual input of a wallpaper standard is not limited to this example.

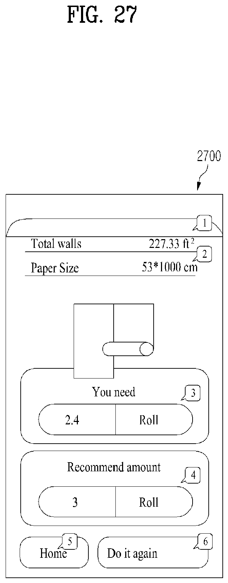

FIG. 27 is an example of a user interface indicating the calculation mode according to the embodiments.

A user interface 2700 shown in FIG. 27 is an example of a user interface that displays a result value by performing the calculation mode according to a signal input by the user to select wallpaper as a material.

The user interface 2700 shown in the figure includes the following elements.

1. Area calculation value (Total walls): A preselected (or stored) area calculation value is displayed.

2. Wallpaper standard setting (Paper size): A wallpaper standard (selected wallpaper standard or manually input wallpaper standard) according to the user input signal described with reference to FIGs. 24 to 26 is displayed.

3. Result value according to formula calculation (You need): A result value according to formula calculation and an image representing wall paper are displayed. The result value is displayed in units selected according to the user input signal described with reference to FIGs. 24 to 26.

4. Recommended calculation value (Recommended amount): When a result value is not an integer, a recommended calculation value calculated based on the result value is displayed.

5. Home: This indicates a function for displaying an initial user interface of an application.

6. Recalculation (Do it again): This indicates a function for recalculating the area value and the calculation value described with reference to FIGs. 24 to 26. When a user input signal selects the recalculation function, an initial user interface of the calculation mode is displayed.

Icons, images, etc. selected according to user input signals may be displayed in different colors, and the application performs the corresponding function. FIG. 27 is only an example, and the user interface indicating the calculation mode is not limited to this example.

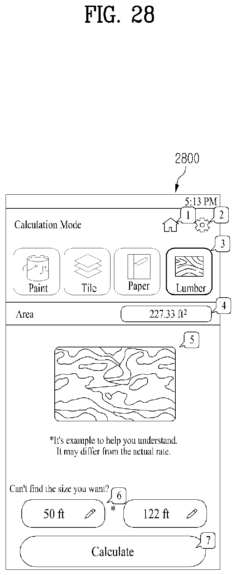

FIG. 28 is an example of a user interface indicating the calculation mode according to the embodiments.

A user interface 2800 shown in FIG. 28 is an example of a user interface indicating the calculation mode according to a signal input by the user to select lumber as a material.

The calculation mode according to the signal input by the user to select lumber is a function for calculating the area of a space based on data received from the laser range finding apparatus and calculating the expected amount of usage (number) of lumber according to a calculation value. A user interface representing the calculation mode includes visual output, such as one or more images, icons, menus, etc., representing sizes, units, etc. The images, icons, etc. shown in the figure are only examples, and locations, sizes, etc. thereof may be changed. Each number shown in the figure represents the following function.

The user interface 2800 shown on the left includes the following elements.

1. Home: The secondary device may display an initial interface of an application according to a signal input by the user to select a home element.

2. Settings: This indicates a function for managing overall application settings.

3. Lumber calculation mode: An icon, an image, etc. representing each material are displayed so that the calculation mode for at least one material among one or more materials may be selected. According to a signal input by the user to select the calculation mode for lumber, icons, images, etc. representing calculation modes for other materials may be deactivated.

4. Area calculation value of previous page (Area): The area calculation value (or area calculation value described with reference to FIGs. 16 and 17) is displayed.

5. Lumber standard selection: This may include one or more icons or images representing a lumber standard. For example, lumber standards having different horizontal and vertical sizes are displayed as individual icons (or images). In the embodiments, a lumber standard selection window includes at least one icon each representing at least one lumber standard. At least one icon may be displayed together or separately, and an icon selected according to a user input signal (for example, a gesture such as a double tap) is located in the center and displayed in a larger size than sizes of icons located on both sides. In addition, the selected icon may be animated and displayed. Moving and changing the icon is performed according to a slice gesture of the user. Each icon may be displayed together with a number indicating a standard. In addition, the selected lumber standard value is immediately stored for calculation of the amount of lumber usage. In addition, the lumber standard value (width and length of the lumber) is displayed in a data display element at the bottom simultaneously or continuously upon selection.

6. Manual input of lumber standard: This indicates a manual input function for a lumber standard. A lumber standard manual input function refers to a function of receiving, from the user, input of a lumber standard rather than a default setting standard.

7. Calculation execution button: This indicates a calculation execution function for calculating the amount of lumber usage based on a pre-calculated area value and a lumber standard selected according to a user input signal. When the calculation execution function is selected according to the user input signal, an application performs calculation based on the area value and the lumber standard.

Icons, images, etc. selected according to user input signals may be displayed in different colors, and the application performs the corresponding function. FIG. 28 is only an example, and the user interface indicating the calculation mode is not limited to this example.

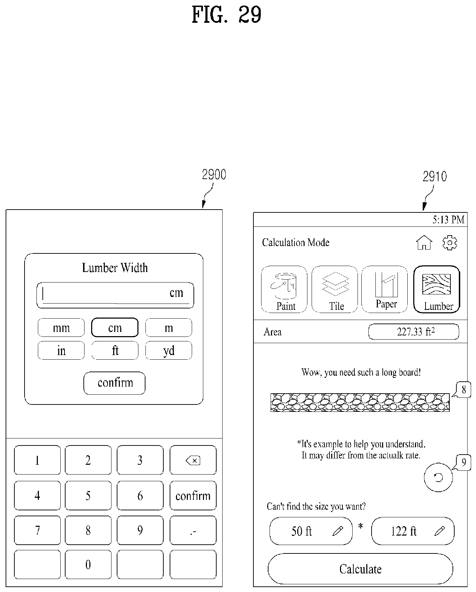

FIG. 29 illustrates an example of a user interface for manual input of a lumber standard.

A user interface 2900 of FIG. 29 is an example of a user interface for manual input of a lumber standard displayed when the lumber standard manual input function is selected according to the user input signal described with reference to FIG. 28. The user interface 2900 for manual input of a lumber standard includes an element for receiving input of a lumber standard, that is, width and length values, an element for initializing and resetting a set unit, and a confirmation element. When a unit is selected according to a user input signal, other unselected units are deactivated.

When the lumber standard is input by the user, a user interface 2910 including a number and an icon (8) representing the manually input lumber standard of the user is displayed, as shown on the right side of the figure. The user interface 2900 may include an icon (9) for modifying the manually input lumber standard or canceling the lumber standard manual input function.

Icons, images, etc. selected according to user input signals may be displayed in different colors, and the application performs the corresponding function. FIG. 29 is only an example, and the user interface indicating the calculation mode is not limited to this example.

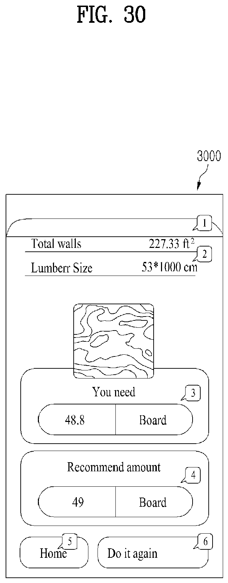

FIG. 30 is an example of a user interface indicating the calculation mode according to the embodiments.

A user interface 3000 shown in FIG. 30 is an example of a user interface that displays a result value by performing the calculation mode according to a signal input by the user to select lumber as a material.

The user interface 3000 shown in the figure includes the following elements.

1. Area calculation value (Total walls): A preselected (or stored) area calculation value is displayed.
2. Lumber standard setting (Lumber size): A lumber standard (selected lumber standard or manually input lumber standard) according to the user input signal described with reference to FIGs. 28 to 29 is displayed.
3. Result value according to formula calculation (You need): A result value according to formula calculation and a lumber image are displayed. The result value is displayed in units selected according to the user input signal described with reference to FIGs. 28 to 29.
4. Recommended calculation value (Recommended amount): When a result value is not an integer, a recommended calculation value calculated based on the result value is displayed.
5. Home: This indicates a function for displaying an initial user interface of an application.
6. Recalculation (Do it again): This indicates a function for recalculating the area value and the calculation value described with reference to FIGs. 28 to 29. When a user input signal selects the recalculation function, an initial user interface of the calculation mode is displayed.

Icons, images, etc. selected according to user input signals may be displayed in different colors, and the application performs the corresponding function. FIG. 30 is only an example, and the user interface indicating the calculation mode is not limited to this example.

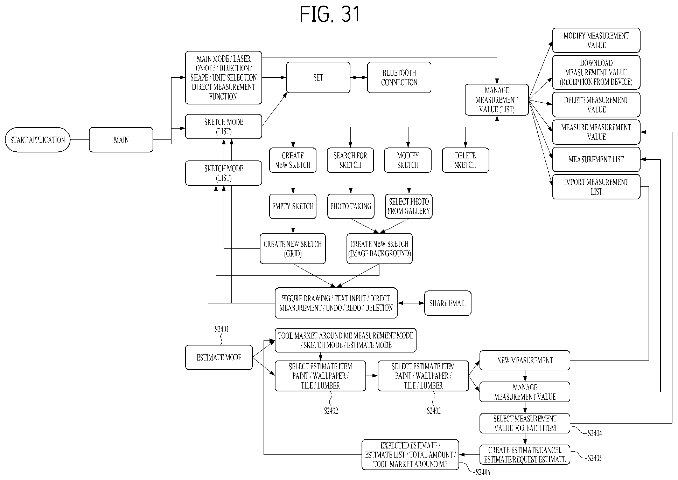

FIG. 31 is a flow diagram illustrating an operation of the secondary device.

As described above, when the application is executed, the secondary device may provide a user interface allowing interaction with the laser range finding apparatus through the display. The secondary device provides a user interface (main screen) that allows selection of the measurement mode, the sketch mode, and the calculation mode. The calculation mode according to the embodiments may be referred to as an estimate mode. FIG. 31 is a flow diagram in which an embodiment of the estimate mode is added to the flow diagram illustrating the operation of the secondary device described above with reference to FIG. 13.

In addition to the calculation mode described with reference to FIGs. 16 to 30, the estimate mode may generate an estimate based on the calculated result value or perform an operation for purchasing materials based on the estimate by communicating with a material sales website and/or an application.

When a signal input by the user to select the measurement mode is received, the secondary device provides a user interface for selection/deletion of the operations and/or functions of the laser range finding apparatus (for example, the operations and/or functions described with reference to FIG. 3, such as laser on/off, direction, shape, unit selection, change, measurement start, etc.). The secondary device performs Bluetooth communication to enable communication with the laser range finding apparatus and transmits signals to select/control the functions of the laser range finding apparatus.

The measurement mode of the application according to the embodiments further includes a measurement value management function. The values measured by the laser range finding apparatus may be displayed in a list form. The measurement value management function includes functions for modifying the measurement value, downloading the measurement value from the laser range finding apparatus, or deleting the measurement value. According to a user input signal, the secondary device may provide a user interface representing each function. That is, the measurement mode may be understood with reference to content described in detail with reference to FIG. 13.

When a signal input by the user to select the sketch mode is input, the secondary device displays a user interface indicating the sketch mode function of the application. Functions of the sketch mode of the application according to the embodiments include creating a new sketch, searching for a sketch, modifying a sketch name, and deleting a sketch. According to a user input signal corresponding to creating a new sketch, the secondary device may provide a user interface for securing of an empty sketch and a photo image, or allowing of selection of a previously stored image. According to a user input signal, the application may create a new sketch or provide a new sketch created based on the secured photo and/or the stored image. That is, the sketch mode may be understood with reference to content described in detail with reference to FIG. 13. However, in addition to FIG. 13, the secondary device may additionally provide back and auto-save functions in the sketch mode. For example, the secondary device may receive a signal input by the user to select a back icon or a signal input by the user to select an auto-save icon while creating a sketch having a grid shape or an image as a background. Accordingly, the secondary device may perform operations based on the user input signal.

Hereinafter, the estimate mode will be described in detail with reference to FIG. 31.

Referring to FIG. 31, in step S2401, when a signal input by the user to select the estimate mode is input, the secondary device displays a user interface indicating an estimate mode function of an application. When the user interface receives a signal input by the user to select at least one material among one or more materials, the secondary device displays a user interface indicating the estimate mode for each material. To perform an estimate mode for each material, the secondary device according to the embodiments may receive a measurement value by communicating with the laser range finding apparatus described with reference to FIGs. 1 to 8 in real time, or may receive a measurement value in real time by transmitting a signal commanding measurement of a new measurement value. The secondary device according to the embodiments may provide a user interface including an icon, an image, etc. indicating an added material according to a signal input by the user to add the material described with reference to FIGs. 10 to 30. For example, the secondary device may output an icon corresponding to an estimate item including paint, wallpaper, tile, lumber, etc.

In step S2402, the secondary device may receive a signal input by the user to select an estimate item. For example, the secondary device may receive a signal input by the user to select an icon corresponding to paint, wallpaper, tile, or lumber.

In step S2403, the secondary device may receive a signal input by the user to input an estimate value for the selected estimate item. In particular, the secondary device may import the estimate value for the selected estimate item from a measurement value management list measured or stored in the measurement mode and the sketch mode described above with reference to FIGs. 12 to 30, rather than directly receiving input of the estimate value from the user. More specifically, the secondary device may output a new measurement icon and a measurement value management icon to input an estimate value for the selected estimate item. The secondary device may perform new measurement in the measurement mode of FIGs. 12 to 14 based on a signal input by the user to select a new measurement icon. In addition, the secondary device may output a previously measured/stored measurement list in the measurement mode or the sketch mode based on a signal input by the user to select the measurement value management icon. That is, the secondary device may receive measurement values from the laser range finding apparatus (or server) and create or manage a list. In addition, to perform the estimate mode, it is possible to perform the estimate mode for each material based on one or more measurement values included in the created and managed list.

In step S2404, the secondary device may receive a signal input by the user to select a measurement value for each item from the output measurement list. In addition, the secondary device may automatically select the estimate item selected through step 2402 from the output measurement list. In this instance, the secondary device may receive, from the user, selection of measurement values for a plurality of estimate items from the output measurement list.

In step S2405, the secondary device may receive a signal input by the user to request or cancel creation of an estimate based on the measurement value for each item newly measured or selected from the measurement value management list. The application may receive a signal input by the user to request an estimate for purchasing materials through a user interface indicating the estimate mode and create the estimate. The secondary device may display a user interface for display of the estimate according to a user input signal. When the signal input by the user to cancel creation of the estimate is received, the application may cancel estimate creation.

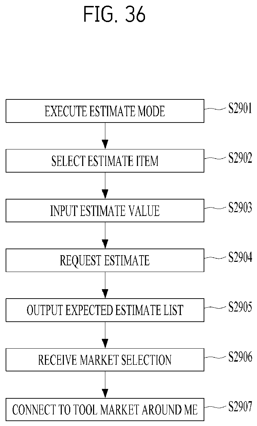

In step S2406, when an expected estimate is generated through step S2405, the secondary device may communicate with a material sales website, a material sales application, etc. based on the generated expected estimate. In this instance, the secondary device may list only a material sales website and a material sales application having an address within a preset range from a current location or a stored location of the user among material sales websites, and output the material sales website and the material sales application to the user. In addition, the estimate mode described above with reference to FIG. 31 will be described once more with reference to FIG. 36. The flow diagram of FIG. 31 is only an example, and the processing order and/or operation of each element may be changed.

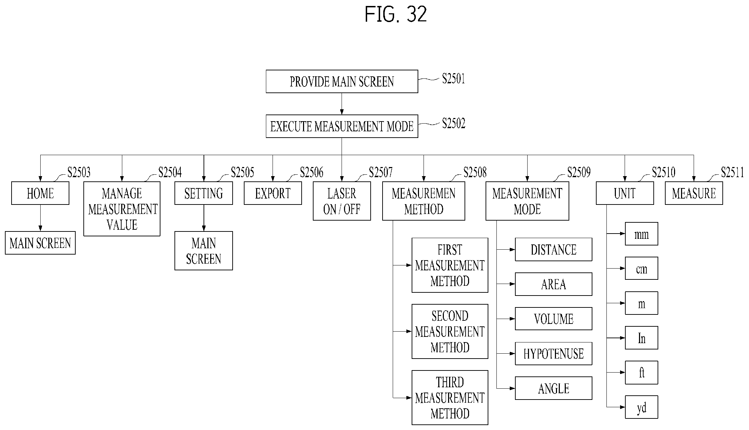

FIG. 32 is a flowchart illustrating an embodiment of using the measurement mode in the secondary device.

Hereinafter, various embodiments of using a function of the measurement mode described above with reference to FIG. 14 will be specifically examined with reference to FIG. 32.

Referring to FIG. 32, in step S2501, when the application is executed, the secondary device may provide a user interface allowing interaction with the laser range finding apparatus through the display. More specifically, the secondary device may provide a main screen including a menu allowing selection of the measurement mode, the sketch mode, and the calculation mode as a user interface.

In step S2502, the secondary device may execute the measurement mode. More specifically, the secondary device may receive a signal indicating that the user selects a measurement mode menu. For example, the user may touch an icon corresponding to the measurement mode on the main screen. In addition, as the measurement mode is executed, the secondary device may provide at least one menu for controlling a function and/or an operation of the measurement mode. Here, at least one menu may include home, measurement value management, settings, export, laser on/off, measurement method, measurement mode, unit selection, measurement, etc. In this instance, each menu may be output through the display of the secondary device as an image or an icon. Hereinafter, for convenience of description, a description will be given on the assumption that each menu is output in an icon form.

Hereinafter, various functions and/or operations performed in the measurement mode will be described through steps S2503 to S2511. However, it is obvious that each step does not necessarily have to be performed and may be performed selectively. For example, the user may select one icon from the measurement mode menu through step S2508, select one icon from the measurement mode menu through step S2509, select one icon from the unit menu through step S2510, and then control the laser range finding apparatus through step S2511. Hereinafter, a detailed description will be given.

In step S2503, the secondary device may receive a signal indicating that the user selects the home icon. Here, the signal indicating that the home icon is selected may include a signal indicating that the user touches the home icon, selects a physical button corresponding to the home icon, or inputs a voice signal corresponding to the home icon. Hereinafter, redundant description with regard to various methods allowing the user to select an icon will be omitted.

When the secondary device receives a signal indicating that the user selects the home icon in step S2503, the secondary device may return to step S2501. That is, in response to receiving the signal indicating that the home icon is selected, the secondary device may provide a main screen including the measurement mode, the sketch mode, and the calculation mode.

In step S2504, the secondary device may receive a signal indicating that the user selects the measurement value management icon. When the secondary device receives the signal indicating that the measurement value management icon is selected, the secondary device may output a measurement value stored in the storage unit (for example, the memory) of the secondary device or stored in the laser range finding apparatus. In this instance, when the measurement value is stored in the storage unit of the secondary device, the secondary device may immediately output the measurement value in response to receiving a signal indicating that the measurement value management icon is selected. On the other hand, when the measurement value is stored in the laser range finding apparatus rather than the secondary device, the secondary device may transmit a signal requesting the stored measurement value to the laser range finding apparatus in response to receiving the signal indicating that the measurement value management icon is selected. Although not shown in the figure, when the laser range finding apparatus receives a signal requesting the measurement value from the secondary device, the laser range finding apparatus may transmit information about the stored measurement value to the secondary device.

In step S2505, the secondary device may receive a signal indicating that the user selects the setting icon. In response to receiving the signal indicating that the setting icon is selected, the secondary device may output at least one menu that provides a function for setting an application in the secondary device. For example, in response to receiving the signal indicating that the setting icon is selected, the secondary device may output a menu corresponding to Bluetooth connection, auto scale, application manual, notice, and Q&A. In this instance, a detailed description will be given using Bluetooth connection as an example. The secondary device may set whether the secondary device and the laser range finding apparatus are connected via Bluetooth separately from activating the laser output of the laser range finding apparatus in step S2507, which will be described later. In this instance, although not shown in the figure, the secondary device and the laser range finding apparatus may request preset authentication code (for example, PIN number) from each other for Bluetooth connection.

In step S2506, the secondary device may receive a signal indicating that the user selects an export icon. When the secondary device receives the signal indicating that the export icon is selected, the secondary device may transmit and/or share information about the measurement value stored in the secondary device to and/or with the outside. Although not shown in the figure, in response to receiving the signal indicating that the export icon is selected, the secondary device may output a list of devices and/or applications capable of performing export. For example, the list may include messenger applications, mail applications, gallery applications, other devices, and other laser range finding apparatuses.

In step S2507, the secondary device may receive a signal indicating that the user selects the laser on/off icon. As the user selects the laser on icon, the secondary device may transmit a signal to perform a control operation to activate laser output of the laser range finding apparatus to the laser range finding apparatus. In this instance, the secondary device may transmit a control signal to activate laser output of the laser range finding apparatus at the same time as the user selects the laser on icon or for activating laser output of the laser range finding apparatus after a preset time (for example, 1 second) elapses. In addition, even when the secondary device receives the signal indicating that the laser on icon is selected from the user, the secondary device may delay activation of laser output until receiving a measurement signal, which will be described later in a later step (S2511). In addition, even when the secondary device and the laser range finding apparatus are not connected via Bluetooth, the secondary device may activate laser output after automatically establishing a Bluetooth connection with the laser range finding apparatus in response to receiving the signal indicating that the user selects the laser on icon.

In step S2508, the secondary device may receive a signal indicating that the user selects a measurement method. Here, the measurement method may indicate whether to use at least one of the first laser module and the second laser module. However, for convenience of the user, the secondary device may use only the first laser module, and may output icons corresponding to a first measurement method indicating a mode for measuring a distance including the length of the laser range finding apparatus, a second measurement method indicating a mode in which both the first laser module and the second laser module are used, and a third measurement method indicating a mode in which only the first laser module is used and a distance is measured without including the length of the laser range finding apparatus. In addition, for visual convenience, the secondary device may display an icon corresponding to the first measurement method as an icon for measuring a distance to the left of the laser range finding apparatus, including the laser range finding apparatus, display an icon corresponding to the second measurement method as an icon for measuring a distance in both directions of the laser range finding apparatus, and display an icon corresponding to the third measurement method as an icon for measuring a distance to the right of the laser range finding apparatus, excluding the laser range finding apparatus. The secondary device may receive a signal indicating that the user selects one of the first measurement method, the second measurement method, and the third measurement method.

In step S2509, the secondary device may receive a signal indicating that the user to select the measurement mode. Here, the measurement mode may include a mode for measuring distance, area, volume, and hypotenuse distance and angle of a right triangle. However, this is only an example, and it is obvious that various measurement modes allowing measurement using the laser range finding apparatus may be added in the future. However, in the figure, a description will be given using distance, area, volume, and hypotenuse distance and angle of a right triangle as examples. Accordingly, the secondary device may output icons representing distance, area, volume, and hypotenuse distance and angle of a right triangle, respectively. The secondary device may receive a signal indicating that the user selects one of distance, area, volume, and hypotenuse distance and angle of a right triangle.

In step S2510, the secondary device may receive a signal indicating that the user selects a unit. Here, units may include mm, cm, m, In, ft, and yd. Similarly, with regard to units, it is obvious that various units that may be measured using the laser range finding apparatus may be added in the future. Accordingly, the secondary device may output icons representing mm, cm, m, In, ft, and yd, respectively. The secondary device may receive a signal indicating that the user selects one of mm, cm, m, In, ft, and yd.

Through steps S2508 to S2510, the secondary device may receive a signal indicating that the user selects a measurement method, a measurement mode, and a unit of the laser range finding apparatus.

Thereafter, in step S2511, the secondary device may receive a signal indicating that the user selects a measurement icon. In response to receiving the signal indicating that a measurement icon is selected, the secondary device may transmit a signal corresponding to the selected information to the laser range finding apparatus through steps S2508 to S2510. For example, when the user selects the first measurement method in step S2508, selects the distance in step S2509, and selects m in step S2510, the secondary device may transmit a signal to perform a control operation to measure the distance in units of m using the first measurement method to the laser range finding apparatus. Thereafter, the secondary device may receive a measurement value obtained by measuring the distance including the length of the laser range finding apparatus in units of m from the laser range finding apparatus through the first laser module. Accordingly, the secondary device may output the measurement value received from the laser range finding apparatus through the display. The above-described example does not require separate calculation from the secondary device, and the secondary device may simply output the measurement value received from the laser range finding apparatus.

However, it is possible to employ an embodiment in which the secondary device according to the embodiments calculates and outputs the measurement value received from the laser range finding apparatus. More specifically, when the user selects the first measurement method in step S2508, selects the angle in step S2509, and selects cm in step S2510, the secondary device may transmit a signal to perform a control operation to measure the angle in units of cm using the first measurement method to the laser range finding apparatus. In this case, in order to output the angle as a measurement value, the laser range finding apparatus may measure a horizontal distance and a hypotenuse distance using the first laser module. The laser range finding apparatus may transmit the measured horizontal distance and hypotenuse distance to the secondary device, and the secondary device may calculate the angle based on a mathematical equation (for example, a trigonometric function) using the received horizontal distance and hypotenuse distance values. Thereafter, the secondary device may output the calculated angle value.

In another embodiment, when the user selects the second measurement method in step S2508, selects a hypotenuse distance of a right triangle in step S2509, and selects In in step S2510, the secondary device may transmit, to the laser range finding apparatus, a signal to perform a control operation to measure the hypotenuse distance of the right triangle in units of In using the second measurement method. In this case, to output the hypotenuse distance of the right triangle as a measurement value, the secondary device may transmit, to the laser range finding apparatus, a signal to perform a control operation to measure a horizontal distance and a vertical distance using the first laser module and the second laser module. Thereafter, the secondary device may receive the measured horizontal distance and vertical distance from the laser range finding apparatus, and calculate and output the hypotenuse distance of the right triangle based on a mathematical equation (for example, the Pythagorean theorem) using the received horizontal and vertical distance values.

That is, the secondary device may request information necessary to output a measurement value corresponding to the measurement mode selected by the user from the laser range finding apparatus, and the laser range finding apparatus may transmit the measured value to the secondary device. More specifically, since the required information varies depending on the measurement value corresponding to the measurement mode, when the measurement method, the measurement mode, and the unit are determined through steps S2508 to S2510, the secondary device may request the necessary information from the laser range finding apparatus based thereon. Thereafter, the secondary device may calculate and output the measurement value desired by the user based on the measurement value received from the laser range finding apparatus and various mathematical equations.

In this instance, even when the secondary device receives selection of a unit such as mm, cm, m, In, ft, or yd as a measurement unit from the user in step S2510, since this unit is a unit value for a distance measured by the laser range finding apparatus, the secondary device may use a different unit to finally output the measurement value corresponding to the measurement mode. More specifically, when the secondary device receives selection of a mode for measuring volume in step S2509, the secondary device may request range finding in units of m from the laser range finding apparatus, receive a distance value measured in units of m from the laser range finding apparatus, then calculate volume in units of $m^3$, which is a unit corresponding to volume, and then output the volume.

In addition, in step S2511, when the secondary device receives a signal indicating that the user selects the measurement icon, the secondary device may activate laser output of the laser range finding apparatus even when the laser on icon is not selected through step S2507.

On the other hand, in step S2511, when the secondary device receives a signal indicating that the user selects the measurement icon, if any one of the measurement method, the measurement mode, and the unit is not selected in steps S2508 to S2510, the secondary device may provide guidance on the fact that any one of the measurement method, the measurement mode, and the unit has not been selected through an alarm or a popup window.

In addition, the flow diagram of FIG. 32 is only an example, and the processing order and/or operation of each element may be changed.

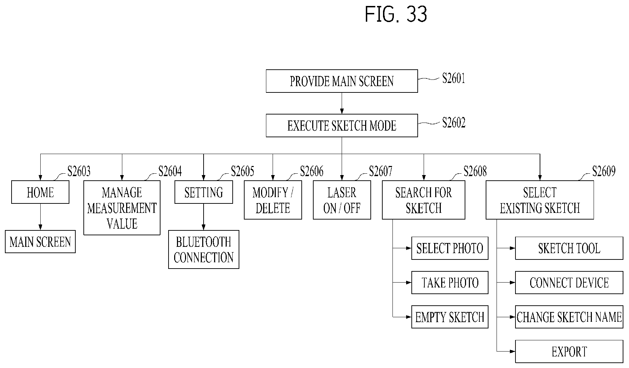

FIG. 33 is a flowchart illustrating an embodiment of using the sketch mode in the secondary device. Hereinafter, various embodiments of using a function of the sketch mode described above with reference to FIG. 15 will be specifically examined with reference to FIG. 33.

Referring to FIG. 33, in step S2601, when the application is executed, the secondary device may provide a user interface allowing interaction with the laser range finding apparatus through the display. More specifically, the secondary device may provide a main screen including a menu allowing selection of the measurement mode, the sketch mode, and the calculation mode as a user interface.

Unlike FIG. 32, in step S2602, the secondary device may receive a signal indicating that the user selects the sketch mode. In response to receiving the signal indicating that the sketch mode is selected, the secondary device may provide at least one menu for controlling a function and/or an operation of the sketch mode. Here, the at least one menu may include home, measurement value management, settings, modification/deletion, sketch search, new sketch creation, existing sketch selection, etc. In this instance, as described above, each menu may be output through the display of the secondary device as an image or icon.

Hereinafter, various functions and/or operations performed in the sketch mode will be described through steps S2603 to S2609. However, since the embodiments of steps S2503 to S2505 described above with reference to FIG. 32 may be applied to steps S2603 to S2605, description thereof will be omitted below.

In step S2606, the secondary device may receive a signal indicating that the user selects the modification/deletion icon. More specifically, when the secondary device receives the signal indicating that the user selects the modification/deletion icon, the secondary device may provide a menu for modifying or deleting the sketch stored in the secondary device.

In step S2607, the secondary device may provide the user with an input window for searching for a sketch. The secondary device may receive a sketch name from the user through the input window. Accordingly, the secondary device may search the storage unit existing in the secondary device for the sketch name received through the input window and output a result thereof.

In step S2608, the secondary device may receive a signal indicating that the user selects a new sketch creation icon. In response to receiving the signal indicating that the user selects the new sketch creation icon, the secondary device may provide photo selection, photo taking, and empty sketch menus. That is, in addition to the embodiment in which the user directly sketches a drawing, the secondary device may allow sketching on a photo by taking a photo using a camera incorporated in the secondary device or by selecting a photo included in the storage unit of the secondary device. In this instance, when the secondary device allows sketching on a photo by taking a photo or selecting a photo, the secondary device may newly store the photo on which the sketch is created in the secondary device.

In addition, when a photo is selected, a photo is taken, or a new sketch is created in step S2608, the secondary device may provide step S2610 to step S2613, which will be described later.

In step S2609, the secondary device may receive a signal indicating that the user selects an existing sketch icon. Prior to step S2609, the secondary device may provide a list of sketches created through step S2608 through an application. Accordingly, the user may select one of the sketches.

Thereafter, the secondary device may provide steps S2610 to S2613 in response to receiving a signal indicating that the existing sketch icon is selected.

In step S2610, the secondary device may provide a sketch tool to the user. Here, the sketch tool may include menus such as drawing a straight line, drawing a rectangle, entering text, going back, going forward, etc. The secondary device may output a sketch of the user on a selected empty sketch or a taken or selected photo through step S2608. That is, the secondary device may allow sketching on an empty sketch, which is a grid-shaped image, or on a taken or selected photo based on drawing a selected straight line, drawing a rectangle, entering text, etc. according to a touch signal of the user, etc.

In step S2611, the secondary device may receive a signal indicating that the user selects device connection. That is, prior to step S2611, the secondary device may output an icon indicating device connection. Thereafter, in response to receiving a signal indicating that a device connection icon is selected, the secondary device may attempt connection to the laser range finding apparatus. In addition, although not shown in the figure, after the secondary device attempts connection to the laser range finding apparatus, the measurement mode described above with reference to FIG. 32 may be executed. Accordingly, the secondary device may include the measurement value measured from the laser range finding apparatus in the sketch mode.

In step S2612, the secondary device may receive a signal indicating that the user selects sketch name change. The secondary device may provide an input window for changing the name of the sketch. The secondary device may receive the sketch name from the user through the input window. Thereafter, the secondary device may perform sketch search described above with reference to step S2607 based on the input sketch name.

In step S2613, the secondary device may receive a signal indicating that the user selects export. Upon receiving the signal indicating that export is selected, the secondary device may determine an extension of a created sketch file (for example, JPG, PDF, Excel, etc.). In this instance, the secondary device may automatically designate a preset extension to determine the extension of the sketch file or receive an extension input from the user. The secondary device may perform step (S2506) described above with reference to FIG. 32 after the extension of the sketch file is determined. That is, the secondary device may transmit and/or share the sketch file to/with the outside after the extension of the sketch file is determined.

In addition, although not shown in the figure, the secondary device may delete the existing sketch based on a signal indicating that the deletion icon is selected in the existing sketch selection step (S2609).

In addition, the flow diagram of FIG. 33 is only an example, and the processing order and/or operation of each element may be changed.

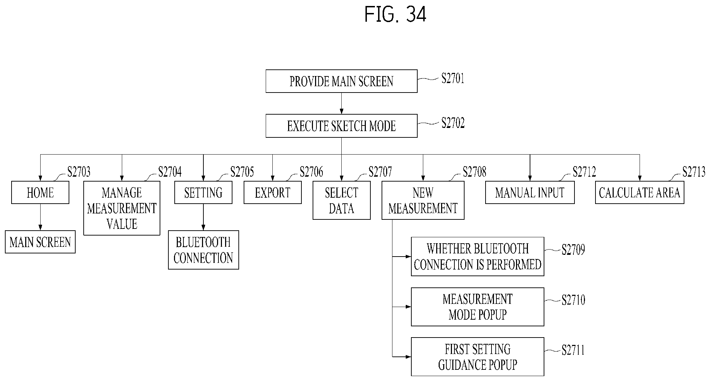

FIG. 34 is a flowchart illustrating an embodiment of using the measurement mode in the secondary device.

Hereinafter, various embodiments of using a function of the measurement mode described above with reference to FIGs. 16 and 17 will be specifically examined with reference to FIG. 34. In addition, descriptions that overlap with those described above with reference to FIGs. 32 and 33 will be omitted.

Referring to FIG. 34, in step S2701, when an application associated with the laser range finding apparatus is executed, the secondary device may provide a user interface allowing interaction with the laser range finding apparatus through the display. More specifically, the secondary device may provide a main screen including a menu allowing selection of the measurement mode, the sketch mode, and the calculation mode as a user interface.

Unlike FIGs. 32 and 34, in step S2702, the secondary device may receive a signal indicating that the user selects the calculation mode. In response to receiving the signal indicating that the calculation mode is selected, the secondary device may provide at least one menu for controlling a function and/or an operation of the calculation mode. Here, the at least one menu may include home, measurement value management, settings, export, data selection, new measurement, manual input, area calculation, etc. In this instance, as described above, each menu may be output through the display of the secondary device as an image or icon.

Hereinafter, various functions and/or operations performed in the calculation mode will be described through steps S2703 to S2713. However, since the embodiments of steps S2503 to S2506 described above with reference to FIG. 32 may be applied to steps S2703 to S2706, description thereof will be omitted below.

In step S2707, the secondary device may provide a data selection list. Here, the data selection list may include existing measurement data stored in the laser range finding apparatus and/or the secondary device in the above-described measurement mode and the sketch mode. In addition, the secondary device may provide an icon allowing selection of data through the data selection list. Accordingly, the secondary device may receive a signal indicating that the user selects at least one piece of data from the data selection list. In addition, when the user selects at least one piece data from the data selection list, the secondary device may display the selected data in different colors. For example, the user may select first data and second data from the data selection list. In this instance, the selected first data and second data may be shaded. Accordingly, the secondary device may output values corresponding to the first data and the second data to a preset region in the calculation mode. In this instance, the secondary device may output the first data and the second data simultaneously or sequentially to the preset region. An embodiment of step S2707 may be understood with reference to FIG. 17.

In step S2708, the secondary device may newly measure necessary data using the laser range finding apparatus. More specifically, the secondary device may receive a signal indicating that the user selects a new measurement icon. In response to receiving the signal indicating that the user selects the new measurement icon, the secondary device may perform at least one of steps S2709 to S2711. In addition, the secondary device may attempt a Bluetooth connection with the laser range finding apparatus at the same time as receiving the signal indicating that the user selects the new measurement icon. In this case, step S2709 may be omitted.

In step S2709, when there is no Bluetooth connection with the laser range finding apparatus, the secondary device may output an alarm to verify whether there is a Bluetooth connection. Here, the alarm may include a visual alarm, a sound alarm, a vibration alarm, etc. In this instance, in the case of the visual alarm, the user interface 6-1 of FIG. 16 may be output.

When the secondary device and the laser range finding apparatus are connected via Bluetooth through step S2709, the secondary device may output a popup window corresponding to the measurement mode in step S2710. In this instance, when the secondary device and the laser range finding apparatus are connected via Bluetooth through step S2709, step S2701 may be performed automatically or manually. In this instance, the popup window may output a user interface 6-2 of FIG. 16. The secondary device may output a user interface summarizing steps S2508 to S2511 of the measurement mode described above with reference to FIG. 32. More specifically, the secondary device may output an icon for selecting a measurement method, an icon for selecting a measurement mode, an icon for selecting a measurement unit, and a measurement icon in a popup window corresponding to the measurement mode. The secondary device may perform new measurement in response to receiving a signal indicating that the user selects an icon output in the popup window corresponding to the measurement mode. Accordingly, the secondary device may output new measured data to a preset region in the calculation mode.

In step S2711, in the case of a first connection to the laser range finding apparatus, the secondary device may output a popup window providing guidance on initial setting. That is, step S2711 may be omitted when the secondary device and the laser range finding apparatus are previously connected to each other.

In step S2712, the secondary device may receive a measurement value directly from the user. More specifically, the secondary device may receive data such as the length of the measurement target directly from the user even when there is no data stored in the application or even when there is data stored in the application. In this instance, when the secondary device receives a signal indicating that the user selects manual input, the secondary device may output a popup window for manual input. Here, the popup window for manual input may be understood with reference to the drawing on the right side of FIG. 15. That is, the secondary device may output a popup window including the input window for manual input and an icon for a unit. When the secondary device receives a measurement value from the user through step S2712, the secondary device may output the input data to the preset region of the calculation mode.

In addition, the above-described steps S2707, S2708, and S2712 may be selectively performed. For example, when the secondary device receives sufficient data to perform step S2713 through step S2707, steps S2708 and S2712 may be omitted. On the other hand, when the secondary device obtains insufficient data to perform step S2713 through step S2707, the secondary device may additionally request step S2708 or step S2712 from the user. For example, the secondary device may receive selection of first data from the user through step S2707, and receive direct input of the user for second data through step S2712. In this instance, the secondary device may output a popup window to request data necessary to perform step (S2713).

In addition, when a data value for calculating the area is input through any one of step S2707, step S2708, and step S2712, the secondary device may change an icon of a preset region where the input data is output. For example, the secondary device may output a blank region or output an input icon before data is input. However, when data is input through any one of steps S2707, S2708, and S2712, the secondary device may input data to the preset region and output an icon indicating that data has been input.

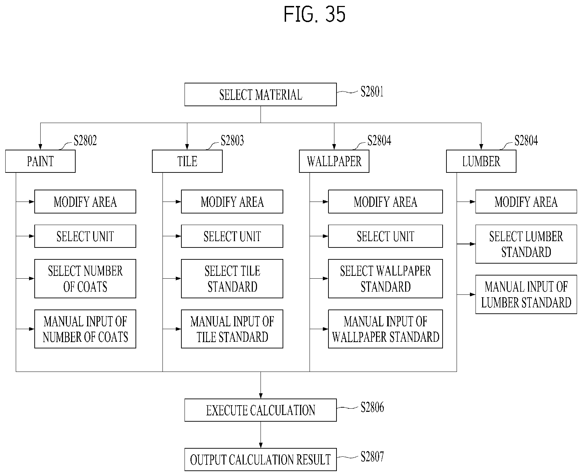

In step S2713, the secondary device may calculate the area based on the data input through the steps described above. The area calculated through step (S2713) may be used to utilize various materials. To this end, the secondary device may output a next icon in the calculation mode and receive a signal indicating the next icon is selected from the user. Hereinafter, various embodiments utilizing the calculated area will be described in detail with reference to FIG. 35.

In addition, the flow diagram of FIG. 34 is only an example, and the processing order and/or operation of each element may be changed.

FIG. 35 is a flowchart illustrating an embodiment of using the calculation mode in the secondary device.

Hereinafter, various embodiments of using a function of the calculation mode described above with reference to FIGs. 18 to 30 will be specifically examined with reference to FIG. 35. In addition, descriptions that overlap with those described above with reference to FIGs. 32 to 34 will be omitted.

Referring to FIG. 35, in step S2801, the secondary device may receive a signal indicating selection of a material from the user. More specifically, through FIG. 34, the secondary device may calculate the required area in calculation mode. Thereafter, the secondary device may receive selection of a material to be used for the calculated area from the user. In this instance, for step S2801, the secondary device may output an icon corresponding to the material. Here, the material may include, but are not limited to, paint, tile, wallpaper, and lumber.

Step S2802 describes an embodiment in which the user selects paint, step S2803 describes an embodiment in which the user selects a tile, step S2804 describes an embodiment in which the user selects wallpaper, and step S2805 describes an embodiment in which the user selects lumber. In addition, when the user selects one of paint, a tile, wallpaper, or lumber, the secondary device may treat the icons corresponding to the remaining icons as deactivated icons.

In step S2802, when the secondary device receives a signal indicating that the user selects an icon corresponding to paint, the secondary device may output an input window for area modification, an icon for unit selection, an icon for selecting the number of coats, and an icon for manual input of the number of coats. Here, the icons may be understood with reference to the user interface of FIG. 16. In other words, the secondary device may change an icon to be output according to a material selected by the user. In step S2802, an embodiment in which the user selects the icon corresponding to paint will be described.

More specifically, the secondary device outputs the input window for area modification to allow the user to manually modify the area value calculated through FIG. 27. The user may modify the area calculated through FIG. 34 by selecting the input window for area modification. In addition, in another embodiment, the secondary device may re-execute the calculation mode of FIG. 34 when the user selects the input window for area modification.

In addition, the secondary device may output the icon for unit selection and receive input of a unit for the selected material from the user. In this instance, the secondary device may recommend and output a commonly used unit for the selected material in the form of a toggle bar. For example, when the selected material is paint, the secondary device may output the icon for unit selection in the form of a toggle bar to allow selective input of liter (L) or gallon (Gal), which is the capacity (volume) unit of paint.

In addition, the secondary device may output the icon for selecting the number of coats. For example, the secondary device may output a plurality of icons, such as an icon corresponding to the number of coats of paint being 1 and an icon corresponding to the number of coats of paint being 2. In addition, as another example, the secondary device may output an icon corresponding to the number of coats of paint and then change the icon so that the number of coats of paint is added according to the number of times the user touches the icon corresponding to the number of coats. In addition, when the secondary device receives selection of the icon corresponding to the number of coats of paint from the user, the secondary device may enlarge and output an icon corresponding to the selected number of paints, and output an icon corresponding to the remaining number of paints in a reduced size.

In addition, when the secondary device receives a signal indicating that the user selects the icon for manual input of the number of coats, the secondary device may output a manual input window for manual input of the number of coats as a popup window (see the user interface 1810 of FIG. 18). In this instance, the secondary device may output an input device IME for receiving input of a number from the user through the popup window. In other words, even though the secondary device may output the icon for selecting the number of coats, since the secondary device cannot output an icon for selecting all the numbers of coats, the secondary device may output the icon for manual input of the number of coats so that the user may directly input the number of coats. On the other hand, when the secondary device receives a signal indicating that the user selects the icon for manual input of the number of coats, the secondary device may output the input device IME for receiving manual input of the number of coats instead of the icon corresponding to the number of costs. That is, instead of a method of outputting the input device for receiving manual input of the number of coats as a popup window, the secondary device may suspend output of the icon corresponding the number of coats and output the input device for receiving manual input of the number of coats.

When a material is selected, an area is input, a unit is selected, and the number of coats is selected or input, the secondary device may output icons and numbers each corresponding thereto. Here, the icons and numbers may be understood with reference to the user interface 1820 of FIG. 18.

In step S2806, the secondary device may receive a signal indicating selection of a calculation execution icon from the user. When the selected material, the area input or calculated through FIG. 34, the selected unit, and the selected or input number of coats are all determined, and the signal indicating selection of the calculation execution icon is received from the user, the secondary device may output a calculation result in step S2807. An output window for the calculation result may be understood with reference to FIGs. 19, 23, 27, and 30. That is, the secondary device may output an area calculation value, a value of the selected number of coats, and a material value required according to calculation in the output window for the calculation result. Further, the secondary device may output a home icon for returning to a main screen and a recalculation icon in the output window for the calculation result. The secondary device may output the main screen upon receiving a signal indicating selection of the home icon, and return to step S2801 upon receiving a signal indicating selection of the recalculation icon.

In step S2803, when the secondary device receives a signal indicating that the user selects an icon corresponding to a tile, the secondary device may output an input window for area modification, an icon for selecting a unit, an icon for selecting a tile standard, and an icon for manual input of a tile standard. Here, the icons may be understood with reference to the user interface 2000 of FIG. 20. Hereinafter, in step S2803, an embodiment in which the user selects an icon corresponding to a tile will be described. In addition, an embodiment of area modification overlaps with that of step S2802, and thus will be omitted.

When the selected material is a tile, the secondary device may output a unit selection icon as a toggle bar so that millimeter (mm) or inch (In), which are size units of the tile, may be selectively input.

The secondary device may output the icon for selecting a tile standard. More specifically, the secondary device may output at least one icon representing at least one tile standard. For example, the secondary device may output an icon having a standard of 300mm*300mm, and an icon having a standard of 60mm*200mm. In addition, when the secondary device receives selection of the icon corresponding to a tile standard from the user, the secondary device may enlarge and output an icon corresponding to the selected tile standard, and output an icon corresponding to a remaining tile standard in a reduced size.

In addition, when the secondary device receives a signal indicating that the icon for manual input of a tile standard is received from the user, the secondary device may output a manual input window for manual input of the tile standard as a popup window (see the central diagram of FIG. 18). In this instance, the secondary device may output the icon for manual input of a tile standard as each of a width icon and a height icon. Accordingly, when the secondary device receives a signal indicating selection of a width icon for manual input of a tile standard, the secondary device may output an input device IME for receiving input of a number from the user as a popup window. Similarly, when the secondary device receives a signal indicating selection of a height icon for manual input of a tile standard, the secondary device may output an input device as a popup window. In addition, the secondary device may first output an input window for receiving input of a width of a tile, and then immediately output an input window for receiving input of a height when the width of the tile is input from the user. On the other hand, when the secondary device receives an input value for the tile width from the user, the secondary device may wait while outputting the input value for the tile width as shown in FIG. 22. Thereafter, when the secondary device receives a signal indicating that the user selects the height icon, the secondary device may output an input device for receiving input of a height as a popup window.

Similarly, when both a width and a height for the selected tile are input, steps S2806 and S2807 may be performed. However, unlike when the selected material is paint, in step S2807, the secondary device may output the exact number of tiles required and the recommended number of tiles for the calculated area, respectively. In other words, unlike in the case of paint, in the case of a tile, the width and height of the selected tile are fixed, and thus it is more desirable to recommend the number of tiles needed than to determine the number of tiles needed using a simple calculation value. Accordingly, the secondary device may output the number of recommended tiles required for the calculated area. Other parts are the same as described above.

In step S2804, when the secondary device receives a signal indicating that the user selects an icon corresponding to wallpaper, the secondary device may output an input window for area modification, an icon for selecting a unit, an icon for selecting a wallpaper standard, and an icon for manual input of a wallpaper standard. Here, the icons may be understood with reference to the user interface 2000 of FIG. 20. Hereinafter, in step S2804, an embodiment in which the user selects an icon corresponding to wallpaper will be described. In addition, an embodiment of area modification overlaps with that of step S2802, and thus will be omitted.

When the selected material is wallpaper, the secondary device may output a unit selection icon as a toggle bar so that centimeter (cm) or inch (In)/foot (ft), which are size units of the wallpaper, may be selectively input.

The secondary device may output the icon for selecting a wallpaper standard. More specifically, the secondary device may output at least one icon representing at least one wallpaper standard. For example, the secondary device may output an icon having a standard of 93cm*1775cm. In addition, when the secondary device receives selection of the icon corresponding to a wallpaper standard from the user, the secondary device may enlarge and output an icon corresponding to the selected wallpaper standard, and output an icon corresponding to a remaining wallpaper standard in a reduced size.

In addition, when the secondary device receives a signal indicating selection of the icon for manual input of a wallpaper standard from the user, the secondary device may output a manual input window for manual input of the wallpaper standard as a popup window (see the user interface of FIG. 25). In this instance, the secondary device may output the icon for manual input of a wallpaper standard as each of a width icon and a height icon. Accordingly, when the secondary device receives a signal indicating selection of a width icon for manual input of a wallpaper standard, the secondary device may output an input device IME for receiving input of a number from the user as a popup window. Similarly, when the secondary device receives a signal indicating selection of a length icon for manual input of a wallpaper standard, the secondary device may output an input device as a popup window. In addition, the secondary device may first output an input window for receiving input of a width of wallpaper, and then immediately and continuously output an input window for receiving input of a length of wallpaper when the width of the wallpaper is input from the user. On the other hand, when the secondary device receives an input value for the wallpaper width from the user, the secondary device may wait while outputting the input value for the wallpaper width as shown in FIG. 26. Thereafter, when the secondary device receives a signal indicating that the user selects the length icon, the secondary device may output an input device for receiving input of a length of wallpaper as a popup window.

Similarly, when both the width and length for the selected wallpaper are input, steps S2806 and S2807 may be performed. As in the case of a tile, in the case of wallpaper, the secondary device may output each of the exact number of pieces of wallpaper required and the recommended number of pieces of wallpaper for the calculated area. Other parts are the same as described above.

In step S2805, when the secondary device receives a signal indicating that the user selects an icon corresponding to lumber, the secondary device may output an input window for area modification, an icon for selecting a lumber standard, and an icon for manual input of a lumber standard. Here, lumber may include flooring commonly used in interior decoration. Hereinafter, in step S2805, an embodiment in which the user selects an icon corresponding to lumber will be described. Here, the icons may be understood with reference to the user interface 2800 of FIG. 28. In addition, an embodiment of area modification overlaps with that of step S2802, and thus will be omitted.

The secondary device may output the icon for selecting a lumber standard. More specifically, the secondary device may output at least one icon representing at least one lumber standard. For example, the secondary device may output a first icon corresponding to first lumber having a first standard and a second icon corresponding to second lumber having a second standard. In addition, when the secondary device selects the icon corresponding to a lumber standard from the user, the secondary device may enlarge and output an icon corresponding to the selected lumber standard, and output an icon corresponding to the remaining lumber standard in a reduced size.

In addition, when the secondary device receives a signal indicating selection of the icon for manual input of a lumber standard from the user, the secondary device may output a manual input window for manual input of the lumber standard as a popup window (see the user interface of FIG. 29). In this instance, the secondary device may output the icon for manual input of a lumber standard as each of a width icon and a height icon. Accordingly, when the secondary device receives a signal indicating selection of a width icon for manual input of a lumber standard, the secondary device may output an input device IME for receiving input of a number from the user as a popup window. Similarly, when the secondary device receives a signal indicating selection of a height icon for manual input of a lumber standard, the secondary device may output an input device as a popup window. In addition, the secondary device may first output an input window for receiving input of a width of lumber, and then immediately and continuously output an input window for receiving input of a length of lumber when the width of the lumber is input from the user. On the other hand, when the secondary device receives an input value for the lumber width from the user, the secondary device may wait while outputting the input value for the input lumber width. Thereafter, when the secondary device receives a signal indicating that the user selects the height icon, the secondary device may output an input device for receiving input of a height of lumber as a popup window.

Similarly, when both the width and height for the selected lumber are input, steps S2806 and S2807 may be performed. As in the case of a tile and wallpaper, in the case of lumber, the secondary device may output each of the exact number of pieces of lumber required and the recommended number of pieces of lumber for the calculated area. Other parts are the same as described above.

In addition, the flow diagram of FIG. 35 is only an example, and the processing order and/or operation of each element may be changed.

FIG. 36 is a flowchart illustrating an embodiment of using an estimate mode in the secondary device.

Hereinafter, various embodiments of using a function of the estimate mode described above with reference to FIG. 31 will be specifically examined with reference to FIG. 36. In addition, descriptions that overlap with those described above with reference to FIGs. 32 to 35 will be omitted.

Referring to FIG. 36, in step S2901, the estimate mode may be executed through the main screen as shown in FIGs. 32 to 35 or in the calculation mode of FIG. 35. When executed through the main screen as shown in FIGs. 32 to 34, the secondary device may output an icon corresponding to the estimate mode on the main screen, which has been described above, and thus a description thereof will not be omitted. In addition, although not shown in FIG. 35 and the related drawings of FIGs. 19, 23, 27, and 30, the secondary device may output a result value of the calculation mode and output an icon for executing the estimate mode at the same time. The secondary device may execute the estimate mode upon receiving a signal indicating that the user selects the icon for executing the estimate mode.

When the estimate mode is executed through step S2901, the secondary device may output an icon for selecting an estimate item, an icon for inputting an estimate value, an icon for selecting a measurement value for each item, and an icon for requesting an estimate.

In step S2902, the secondary device may receive a signal indicating selection of an estimate item. Here, the estimate item may include all materials that can be calculated in the above-described calculation mode. For example, estimate item may include paint, wallpaper, tile, lumber, etc. The secondary device may receive a signal indicating selection of an icon corresponding to the estimate item from the user. Further, when the estimate mode is immediately executed in the calculation mode of FIG. 35, the secondary device may automatically select a material selected in the calculation mode as an estimate item. Further, the secondary device may receive selection of a plurality of estimate items. For example, the user may select both paint and wallpaper at the same time.

In step S2903, the secondary device may receive an estimate value. More specifically, the secondary device may output an input window for receiving input of a value for the selected estimate item. Accordingly, the secondary device may receive manual input of a value from the user for the selected estimate item through the input window. In addition, when the secondary device executes the estimate mode directly in the calculation mode of FIG. 35, the quantity of material calculated in the calculation mode may be automatically input to the input window. In addition, when there are two or more selected materials, the secondary device may output an input window for receiving input of a numerical value for each of the selected materials. In this instance, the secondary device may simultaneously or continuously output the input windows for the respective selected material. In addition, the secondary device may receive input of an estimate value based on a value measured in the measurement mode of FIG. 25.

In step S2904, the secondary device may receive an estimate request signal. More specifically, the secondary device may output an estimate request icon and receive a signal indicating that the user selects the estimate request icon. In this instance, the secondary device may output the estimate request icon in an activated state only after an estimate item is selected through steps S2902 and S2903 and a value for the selected estimate item is input. In other words, the secondary device may display the estimate request icon in a deactivated state until an estimate item is selected and a value for the selected estimate item is input.

In step S2905, the secondary device may output an expected estimate list upon receiving an estimate request signal from the user. Here, the expected estimate list may include at least one expected estimate for the selected estimate item and value. In this instance, the secondary device may maintain communication with the outside to output the expected estimate list. That is, the secondary device may receive an expected estimate for the selected estimate item and value by communicating with at least one online/offline market selling the selected estimate item. Accordingly, the secondary device may output the expected estimate received from the online/offline market as a list. That is, the secondary device may output the expected estimate for the selected estimate item and value sold by at least one market as a list. In this instance, the secondary device may sort only offline markets located within a preset distance from the user location and output the offline markets as an expected estimate list.

In step S2906, the secondary device may receive a signal indicating selection of a market from the output expected estimate list. For example, the secondary device may receive a signal indicating that the user selects a first market included in the output expected estimate list.

In step S2907, the secondary device may connect the market selected through step S2906. More specifically, when the user selects a market included in the output expected estimate list, the secondary device may request the item and quantity requested by the user from the corresponding market through the server. Alternatively, when the user selects a market included in the output expected estimate list, the secondary device may execute another application allowing connection to the market. For example, when the user selects a market included in the output expected estimate list, the secondary device may execute a call application to connect a call to the market. Alternatively, when the user selects a market included in the output expected estimate list, the secondary device may execute an Internet application and access a homepage of the corresponding market.

In addition, the flow diagram of FIG. 36 is only an example, and the processing order and/or operation of each element may be changed.

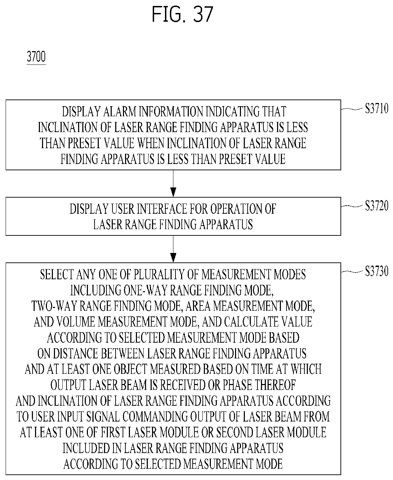

FIG. 37 is a flow diagram of a laser range finding method according to the embodiments.

A flowchart 3700 of FIG. 37 illustrates an example of an laser range finding method of an application executed on a measurement device (for example, the secondary device described with reference to FIG. 11) capable of communicating with the laser range finding apparatus included in the laser range finding system described with reference to FIG. 11.

As described with reference to FIG. 11, the measurement device capable of communicating with the laser range finding apparatus includes a display unit, one or more processors (for example, a controller), and a memory. The memory according to the embodiments includes at least one program executed by the one or more processors, the at least one program includes one or more instructions, and the one or more instructions may execute functions of the applications described with reference to FIGs. 11 to 36.

When the inclination of the laser range finding apparatus is less than a preset value, the measurement device according to embodiments may display alarm information indicating that the inclination of the laser range finding apparatus is less than the preset value on the display unit (3710). The measurement device according to the embodiments may receive a signal indicating that the inclination is less than the preset value from the laser range finding apparatus. Detailed descriptions of the inclination and preset values of the laser range finding apparatus are the same as those described with reference to FIGs. 5 to 9 and are therefore omitted.

The measurement device according to the embodiments displays a user interface for operation of the laser range finding apparatus on the display unit (3720). Descriptions of the user interface according to the embodiments are the same as those described with reference to FIGs. 12 to 36, and are therefore omitted.

The measurement device according to the embodiments may select any one of a plurality of measurement modes including a one-way range finding mode, a two-way range finding mode, an area measurement mode, and a volume measurement mode, and calculate a value according to the selected measurement mode based on a distance between the laser range finding apparatus and at least one object measured based on a time at which an output laser beam is received or a phase thereof and the inclination of the laser range finding apparatus according to a user input signal commanding output of the laser beam from at least one of a first laser module or a second laser module included in the laser range finding apparatus according to the selected measurement mode (3730).

The flowchart shown in the figure is only an example, and the order of elements included in the flowchart may be changed.

Components of the laser range finding apparatus, the measurement device, and the laser range finding system according to the embodiments described with reference to FIGs. 1 to 37 may be implemented as hardware, software, firmware, or a combination thereof including one or more processors combined with a memory. Components of the device according to the embodiments may be implemented as one chip, for example, and one hardware circuit. In addition, components of the laser range finding apparatus and the laser range finding system according to the embodiments may each be implemented as a separate chip. In addition, at least one of the components of the laser range finding apparatus, the measurement device, and the laser range finding system according to the embodiments may include one or more processors capable of executing one or more programs, and the one or more programs may execute one or more operations among the operations/methods of the laser range finding apparatus, the measurement device, and the laser range finding system described with reference to FIGs. 1 to 37, or include instructions for executing the operations.

For convenience of description, each drawing has been described separately. However, it is possible to design and implement a new embodiment by merging the embodiments described in each drawing. In addition, designing a computer-readable recording medium, on which programs for executing the previously described embodiments are recorded, according to the needs of those skilled in the art also falls within the scope of the rights of the embodiments. The apparatus and method according to the embodiments are not limited to the configuration and method of the embodiments described above, and the embodiments may be selectively combined in whole or in part so that various modifications may be made. Although preferred embodiments of the embodiments have been shown and described, the embodiments are not limited to the specific embodiments described above, and may be variously modified and implemented by those skilled in the art without departing from the gist of the embodiments claimed in the claims. Further, these modified implementations should not be understood individually from the technical ideas or perspectives of the embodiments. Descriptions of the apparatus and the method according to the embodiments may be applied to complement each other.

Various components of the apparatus according to the embodiments may be configured by hardware, software, firmware, or a combination thereof. Various components of the embodiments may be implemented as one chip, for example, one hardware circuit. Depending on the embodiments, the components according to the embodiments may be implemented as separate chips, respectively. Depending on the embodiments, at least one or more of the components of the apparatus according to the embodiments may include one or more processors capable of executing one or more programs, and the one or more programs may execute one or more of the operations/methods according to the embodiments or include instructions for execution. Executable instructions for performing the methods/operations of the apparatus according to the embodiments may be stored in a non-transitory CRM or other computer program products configured for execution by one or more processors, or may be stored in a transitory CRM or other computer program products configured for execution by one or more processors. In addition, the memory according to the embodiments may be used as a concept including not only a volatile memory (for example, a RAM, etc.) but also a nonvolatile memory, a flash memory, a PROM, etc. In addition, implementation in the form of a carrier wave such as transmission over the Internet may be included. In addition, the processor-readable recording medium may be distributed to computer systems connected by a network, so that processor-readable code may be stored and executed in a distributed manner.

In this document, "/" and ", " are interpreted as "and/or." For example, "A/B" is interpreted as "A and/or B", and "A, B" is interpreted as "A and/or B" . Additionally, "A/B/C" means "at least one of A, B, and/or C." In addition, "A, B, and C" also means "at least one of A, B, and/or C." Additionally, in this document, "or" is interpreted as "and/or." For example, "A or B" may mean 1) only "A", 2) only "B", or 3) "A and B". In other words, "or" in this document may mean "additionally or alternatively."

Terms such as first, second, etc. may be used to describe various components of the embodiments. However, interpretation of various components according to the embodiments should not be limited by the above terms. These terms are merely used to distinguish one component from another. For example, a first user input signal may be referred to as a second user input signal. Similarly, the second user input signal may be referred to as the first user input signal. Use of these terms should be interpreted without departing from the scope of the various embodiments. The first user input signal and the second user input signal are both user input signals, but do not mean the same user input signals unless clearly indicated in the context.

The terms used to describe the embodiments is for the purpose of describing specific embodiments and is not intended to limit the embodiments. As used in the description of the embodiments and the claims, the singular form is intended to include the plural form unless the context clearly dictates otherwise. The expression "and/or" is used in a sense that includes all possible combinations between the terms. The expression "include" describes the presence of features, numbers, steps, elements, and/or components and does not imply the absence of additional features, numbers, steps, elements, and/or components. Conditional expressions such as "in the case of ~," "when ~," etc. used to describe the embodiments are not limited to optional cases. It is intended that, when a specific condition is satisfied, the relevant operation is performed, or the relevant definition is interpreted in response to the specific condition.

[Mode for Invention]

A detailed description has been given in the best mode for carrying out the invention.

[Industrial Applicability]

It is obvious to those skilled in the art that various changes and modifications may be made in the present invention without departing from the spirit or scope of the present invention. Accordingly, the present invention is intended to cover modifications and variations of the present invention provided within the scope of the appended claims and equivalents thereto.

**Claims**

1. A measurement device capable of communicating with a laser range finding apparatus, the measurement device comprising:

   a display unit;
   one or more processors; and
   a memory, wherein:

   the device is allowed to communicate with the laser range finding apparatus, the memory comprises at least one program executed by the one or more processors, and the at least one program comprises one or more instructions, and
   the one or more instructions are configured to:

   display, on the display unit, alarm information indicating that an inclination of the laser range finding apparatus is less than a preset value when the inclination of the laser range finding apparatus is less than the preset value;
   display a user interface for operation of the laser range finding apparatus on the display unit; and
   select any one of a plurality of measurement modes including a one-way range finding mode, a two-way range finding mode, an area measurement mode, and a volume measurement mode, and calculate a value according to the selected measurement mode based on a distance between the laser range finding apparatus and at least one object measured based on a time at which an output laser beam is received or a phase thereof and the inclination of the laser range finding apparatus according to a user input signal commanding output of the laser beam from at least one of a first laser module or a second laser module included in the laser range finding apparatus according to the selected measurement mode.

2. A recording medium storing at least one program configured to be executed by one or more processors of a measurement device allowed to communicate with a laser range finding apparatus and comprising a display unit, the at least one program comprising one or more instructions configured to:

   display, on the display unit, alarm information indicating that an inclination of the laser range finding apparatus is less than a preset value when the inclination of the laser range finding apparatus is less than the preset value;
   display a user interface for operation of the laser range finding apparatus on the display unit; and
   select any one of a plurality of measurement modes including a one-way range finding mode, a two-way range finding mode, an area measurement mode, and a volume measurement mode, and calculate a value according to the selected measurement mode based on a distance between the laser range finding apparatus and at least one object measured based on a time at which an output laser beam is received or a phase thereof and the inclination of the laser range finding apparatus according to a user input signal commanding output of the laser beam from at least one of a first laser module or a second laser module included in the laser range finding apparatus according to the selected measurement mode.

3. A laser range finding apparatus comprising:

   a body;
   a first laser module and a second laser module located at both ends along a vertical axis of the body, the first laser module outputting a first laser beam, the second laser module outputting a second laser beam in a direction opposite to the first laser module;
   a sensor unit included in the body, the sensor unit securing an inclination of the laser range finding apparatus;
   a display unit located on a surface of the body; and
   a controller included in the body,
   wherein the controller determines whether the secured inclination is less than a preset value, generates an alarm indicating that the secured inclination is less than the preset value, performs a control operation so that a laser beam is output from at least one of the first laser module or the second laser module, and calculates a distance between the laser range finding apparatus and at least one object based on a time at which the output laser beam is received or a phase change of the output laser beam and the secured inclination.

# FIG. 1

$a_1 + a_2 + a_3 = a_4$

$a_4$

$a_3$

$a_1$

$a_2$

$W_1$

$W_2$

100

# FIG. 2

(a)

(b)

FIG. 3

FIG. 4

100

410 MEASURING UNIT

420 SENSOR UNIT

400 CONTROL UNIT

430 MEMORY

403 MEMORY CONTROLLER

402 CALCULATOR

401 processor

421 FIRST LASER MODULE

470 POWER UNIT

422 SECOND LASER MODULE

440 USER INPUT SIGNAL CONTROLLER

450 PERIPHERAL DEVICE INTERFACE

441 USER INPUT SIGNAL UNIT

442 DISPLAY UNIT

460 COMMUNICATION UNIT

FIG. 5

(a)

500

< A°

Auto measuring Active
MEASURE INCLINED ANGLE
PROVIDE ALARM WHEN INCLINED
ANGLE IS LESS THAN PRESET VALUE A

(b)

Auto measuring Active
EMIT LASER WHEN INCLINED ANGLE IS
LESS THAN PRESET VALUE A

EP 4 365 633 A1

FIG. 6

AUTOMATIC MEASUREMENT MODE ON — 610

SECURE INCLINATION — 620

IS INCLINATION LESS THAN PRESET VALUE? — 630

NO

YES

PROVIDE ALARM — 640

OUTPUT LASER BEAM — 650

MEASURE DISTANCE — 660

OUTPUT MEASUREMENT VALUE — 670

610

FIG. 7

EP 4 365 633 A1

FIG. 8

(a) k = HALF LENGTH AT CENTER OF PRODUCT

100

k    L1

a
a = k + L1

(b) 100

x

a'

a

CORRECTED LENGTH  a' = a cos x

OUTPUT LENGTH = a' + k

W1                                                    W2

48

# FIG. 9

$B = k + L2$

(a)

L2    k    k    L1

100

$a$
$a = k + L1$

(b)

100

b

b'

y    x

a'

a

W1           W2

CORRECTED LENGTH $a' = a \cos x$
CORRECTED LENGTH $b' = b \cos x$
OUTPUT LENGTH $1 = (a'+b') = a \cos x + b \cos y$
OUTPUT LENGTH $2 = (a'+b')-2k$

## FIG. 10

(a)

(b)

FIG. 11

100

1100

SECONDARY DEVICE

CONTROLLER

COMMUNICATION UNIT

DISPLAY UNIT

MEMORY

# FIG. 12

1200

11:46

⊿ll 5G

Measuring Mode 1210

Sketch Mode 1220

Calculation Mode 1230

## FIG. 13

# FIG. 14

1200

Measuring Mode 🏠 ☰ ⚙ ➦

Laser ⬜OFF

Direction

Function ⌃

Units ⌃

| mm | cm | m | ln | ft | yd |

| Measurements | | | More |
|---|---|---|---|
| L / W | R / H | D | Data |
| - | - | - | 469.000 mm |
| - | - | - | 462.000mm |
| 0.183m | - | - | 0.183m |

Measure

EP 4 365 633 A1

FIG. 15

55

FIG. 16

Calculation Mode  🏠 ☰ ⚙ ⤴

Data selection

| L / W | R / W | D | Data |
|---|---|---|---|
| 2.318 ft | 12.794 ft | 2.318 ft | ☐ 129.411 ft |
| 5.478 ft | 13.181 ft | 5.478 ft | ☐ 18.075 ft |
| 5.626 ft | 5.740 ft | 5.626 ft | ☐ 145.226 ft |
| 557 / kh | 4'8 / kh | 4'6 / kh | ☐ 70.162 ft |
| 1.395 m | 1.539 yd | 4.507 ft | ☐ 61.538 ft |
| 1556.000 mm | 1476.000 mm | 1470.999 „ | ☐ 70.584 ft |
| 5'6'7 / kh | 5.564 ft | 5'7 / kh | ☐ 59.841 ft |
| 5.554 ft | 60 / kh | 60 / kh | ☐ 30.008 ft |
| 5'0/kh | 5'0 / kh | 5.548 ft | ☐ ✳ |

Calculation Area

✏ Width  *  ✏ Weight

Calcuating Area          Next >

---

6-1

CALCULATION MODE  ☰ ⚙ ⤴

Data selection

| L / W | R / H | D | Data |
|---|---|---|---|
| 4442.000 mm | 2382.000 mm | | ☐ 10580.644.000 mm² |
| 399.000 mm | 397.000 mm | | ☐ 158408.000 mm² |
| 217.000 mm | 179.000 mm | — | 396.000 mm |

connect the device to tap for new measurement

| 0.718 ft | 0.5'1 f(f) | — | 1.240 ft |
| 9.645 ft | 5.787 f(f) | — | 15.432 f(f) |
| 26.300 cm | 10.100 cm | — | 26.400 cm |
| 23.699 cm | 15.699 cm | — | ☰ |

Painting Area
Tap pencil icon to white down manually

✏ Width  *  ✏ Height

Calcuating Area          Next >

---

6-1

CALCULATION MODE  ☰ ⚙ ⤴

Single(Except)   Dihedral   Single(Except)

Length   Area   Rectangle

mm   cm   m   In   ft   ft/ft   yd

Cancel          Confirm

| 0.718 ft | 0.5'1 f(f) | — | 1.240 ft |
| 9.645 ft | 5.787 f(f) | — | 15.432 f(f) |
| 26.300 cm | 10.100 cm | — | 26.400 cm |
| 23.699 cm | 15.699 cm | — | ☰ |

Painting Area
Tap pencil icon to white down manually

✏ Width  *  ✏ Height

Calcuating Area          Next >

---

6-3

Calculation Mode  🏠 ☰ ⚙ ⤴

Data selection

| L / W | R / W | D | Data |
|---|---|---|---|
| 2.318 | | | ✕ 9.411 ft |
| 5.478 | | | 8.075 ft |
| 5.626 | | | 5.226 ft |
| 557 / | | | 0.162 ft |
| 1.395 | | | 1.538 ft |
| 1556.000 mm | 1476.000 mm | 1470.999 „ | ☐ 70.584 ft |
| 5'6'7 / kh | 5.564 ft | 5'7 / kh | ☐ 59.841 ft |
| 5.554 ft | 60 / kh | 60 / kh | ☐ 30.0008 ft |
| 5'0/kh | 5'0 / kh | 5.548 ft | ☐ ✳ |

✳ >>>> ⚏
If you want to measure the area or change the unit. Press and hold the button.

Calculation Area

Tap pencil icon to white down manually

✏ Width          ✏ Weight

Calcuating Area          Next >

EP 4 365 633 A1

FIG. 17

# FIG. 18

FIG. 19

FIG. 20

2000

5:13 PM

Calculation Mode

Paint  Tile  Paper  Lumber

Area  227.33 ft²

mm ⬤ in

300 * 300

300

Can't find the size you want?

Width ✎  *  Height ✎

Calculate

# FIG. 21

2100

2110

Tile Width

mm

| mm | cm | m |
| in | ft | yd |

confirm

Tile Width

mm

| mm | cm | m |
| in | ft | yd |

confirm

| 1 | 2 | 3 | ⌫ |
| 4 | 5 | 6 | confirm |
| 7 | 8 | 9 | .- |
|  | 0 |  |  |

| 1 | 2 | 3 | ⌫ |
| 4 | 5 | 6 | confirm |
| 7 | 8 | 9 | .- |
|  | 0 |  |  |

# FIG. 22

2200

| | 5:13 PM |
|---|---|
| Calculation Mode | 🏠 ⚙️ |

Paint | Tile | Paper | Lumber

| Area | 227.33 ft² |

Unit | mm ⬤ in

500 * ?

9

500 mm ✎ * Height ✎

Calculate

2210

| | 5:13 PM |
|---|---|
| Calculation Mode | 🏠 ⚙️ |

Paint | Tile | Paper | Lumber

| Area | 227.33 ft² |

Unit | mm ⬤ in

500 * 500

9

500 mm ✎ * 500 mm ✎

Calculate

FIG. 23

2300

FIG. 24

FIG. 25

2500

2510

wallpaper Width

| cm |

| mm | cm | m |
| in | ft | yd |

confirm

| 1 | 2 | 3 | ⟨×⟩ |
| 4 | 5 | 6 | confirm |
| 7 | 8 | 9 | .- |
| | 0 | | |

wallpaper Width

| cm |

| mm | cm | m |
| in | ft | yd |

confirm

| 1 | 2 | 3 | ⟨×⟩ |
| 4 | 5 | 6 | confirm |
| 7 | 8 | 9 | .- |
| | 0 | | |

FIG. 26

2600

Unit           cm ⬤━ in/ft

93*?

Can't find the size you want?

93 cm ✎  *  Height ✎

Calculate

2610

5:13 PM

Calculation Mode     🏠 ⚙

Paint    Tile    Paper    Lumber

Area         227.33 ft²

Unit          cm ⬤━ in/ft

106*1560

9

106 cm ✎  *  1560 cm ✎

Calculate

FIG. 27

2700

| | |
|---|---|
| Total walls | 227.33 ft² |
| Paper Size | 53*1000 cm |

You need

| | |
|---|---|
| 2.4 | Roll |

Recommend amount

| | |
|---|---|
| 3 | Roll |

Home    Do it again

FIG. 28

2800

EP 4 365 633 A1

FIG. 29

2900

2910

Lumber Width

[                    cm]

( mm )  ( cm )  ( m )
( in )  ( ft )  ( yd )

( confirm )

| 1 | 2 | 3 | ⌫ |
| 4 | 5 | 6 | confirm |
| 7 | 8 | 9 | .- |
|   | 0 |   |   |

5:13 PM

Calculation Mode        🏠 ⚙

Paint   Tile   Paper   Lumber

Area          ( 227.33 ft² )

Wow, you need such a long board!          8

*It's example to help you understand.
It may differ from the actualk rate.          9

Can't find the size you want?

( 50 ft  ✎ )  *  ( 122 ft  ✎ )

( Calculate )

69

FIG. 30

3000

Total walls | 227.33 ft²

Lumberr Size | 53*1000 cm

You need

48.8 | Board

Recommend amount

49 | Board

Home | Do it again

FIG. 31

START APPLICATION → MAIN → MAIN MODE : LASER ON/OFF / DIRECTION / SHAPE / UNIT SELECTION / DIRECT MEASUREMENT FUNCTION

SET → BLUETOOTH CONNECTION

MANAGE MEASUREMENT VALUE (LIST)
- MODIFY MEASUREMENT VALUE
- DOWNLOAD MEASUREMENT VALUE (RECEPTION FROM DEVICE)
- DELETE MEASUREMENT VALUE
- MEASURE MEASUREMENT VALUE
- MEASUREMENT LIST
- IMPORT MEASUREMENT LIST

SKETCH MODE (LIST)
- CREATE NEW SKETCH → EMPTY SKETCH → CREATE NEW SKETCH (GRID)
- SEARCH FOR SKETCH → PHOTO TAKING → CREATE NEW SKETCH (IMAGE BACKGROUND)
- MODIFY SKETCH → SELECT PHOTO FROM GALLERY
- DELETE SKETCH

SKETCH MODE (LIST) → FIGURE DRAWING / TEXT INPUT / DIRECT MEASUREMENT / UNDO / REDO / DELETION → SHARE EMAIL

TOOL MARKET AROUND ME MEASUREMENT MODE : SKETCH MODE / ESTIMATE MODE

S2401 ESTIMATE MODE
- SELECT ESTIMATE ITEM PAINT : WALLPAPER : TILE : LUMBER — S2402
- SELECT ESTIMATE ITEM PAINT : WALLPAPER : TILE : LUMBER — S2402
- EXPECTED ESTIMATE / ESTIMATE LIST / TOTAL AMOUNT / TOOL MARKET AROUND ME
- NEW MEASUREMENT
- MANAGE MEASUREMENT VALUE
- SELECT MEASUREMENT VALUE FOR EACH ITEM — S2404
- CREATE ESTIMATE/CANCEL ESTIMATE/REQUEST ESTIMATE — S2405

S2406

# FIG. 32

```
                          PROVIDE MAIN SCREEN ─── S2501

                          EXECUTE MEASUREMENT MODE ─── S2502

    ┌──────────┬──────────────┬──────────┬──────────┬──────────┬──────────────┬──────────────┬────────┬──────────┐
   S2503        S2504         S2505      S2506      S2507       S2508          S2509          S2510     S2511

┌────────┐ ┌────────────┐ ┌────────┐ ┌────────┐ ┌────────┐ ┌────────────┐ ┌────────────┐ ┌──────┐ ┌─────────┐
│  HOME  │ │  MANAGE    │ │SETTING │ │ EXPORT │ │ LASER  │ │MEASUREMEN  │ │MEASUREMENT │ │ UNIT │ │ MEASURE │
└────────┘ │MEASUREMENT │ └────────┘ └────────┘ │ ON/OFF │ │  METHOD    │ │   MODE     │ └──────┘ └─────────┘
     │     │  VALUE     │      │                └────────┘ └────────────┘ └────────────┘    │
     ▼     └────────────┘      ▼                                 │              │           ▼
┌───────────┐               ┌────────┐                    ┌────────────┐  ┌──────────┐  ┌──────┐
│MAIN SCREEN│               │  MAIN  │                    │   FIRST    │  │ DISTANCE │  │  mm  │
└───────────┘               │ SCREEN │                    │MEASUREMENT │  └──────────┘  └──────┘
                            └────────┘                    │   METHOD   │  ┌──────────┐  ┌──────┐
                                                          └────────────┘  │   AREA   │  │  cm  │
                                                          ┌────────────┐  └──────────┘  └──────┘
                                                          │   SECOND   │  ┌──────────┐  ┌──────┐
                                                          │MEASUREMENT │  │  VOLUME  │  │  m   │
                                                          │   METHOD   │  └──────────┘  └──────┘
                                                          └────────────┘  ┌──────────┐  ┌──────┐
                                                          ┌────────────┐  │HYPOTENUSE│  │  In  │
                                                          │   THIRD    │  └──────────┘  └──────┘
                                                          │MEASUREMENT │  ┌──────────┐  ┌──────┐
                                                          │   METHOD   │  │  ANGLE   │  │  ft  │
                                                          └────────────┘  └──────────┘  └──────┘
                                                                                        ┌──────┐
                                                                                        │  yd  │
                                                                                        └──────┘
```

# FIG. 33

PROVIDE MAIN SCREEN — S2601

↓

EXECUTE SKETCH MODE — S2602

| HOME S2603 | MANAGE MEASUREMENT VALUE S2604 | SETTING S2605 | MODIFY / DELETE S2606 | LASER ON / OFF S2607 | SEARCH FOR SKETCH S2608 | SELECT EXISTING SKETCH S2609 |

HOME → MAIN SCREEN

SETTING → BLUETOOTH CONNECTION

SEARCH FOR SKETCH →
- SELECT PHOTO
- TAKE PHOTO
- EMPTY SKETCH

SELECT EXISTING SKETCH →
- SKETCH TOOL
- CONNECT DEVICE
- CHANGE SKETCH NAME
- EXPORT

FIG. 34

PROVIDE MAIN SCREEN — S2701

EXECUTE SKETCH MODE — S2702

- HOME — S2703 → MAIN SCREEN
- MANAGE MEASUREMENT VALUE — S2704
- SETTING — S2705 → BLUETOOTH CONNECTION
- EXPORT — S2706
- SELECT DATA — S2707
- NEW MEASUREMENT — S2708
  - WHETHER BLUETOOTH CONNECTION IS PERFORMED — S2709
  - MEASUREMENT MODE POPUP — S2710
  - FIRST SETTING GUIDANCE POPUP — S2711
- MANUAL INPUT — S2712
- CALCULATE AREA — S2713

FIG. 35

SELECT MATERIAL — S2801

PAINT — S2802 | TILE — S2803 | WALLPAPER — S2804 | LUMBER — S2804

**PAINT:**
- MODIFY AREA
- SELECT UNIT
- SELECT NUMBER OF COATS
- MANUAL INPUT OF NUMBER OF COATS

**TILE:**
- MODIFY AREA
- SELECT UNIT
- SELECT TILE STANDARD
- MANUAL INPUT OF TILE STANDARD

**WALLPAPER:**
- MODIFY AREA
- SELECT UNIT
- SELECT WALLPAPER STANDARD
- MANUAL INPUT OF WALLPAPER STANDARD

**LUMBER:**
- MODIFY AREA
- SELECT LUMBER STANDARD
- MANUAL INPUT OF LUMBER STANDARD

EXECUTE CALCULATION — S2806

OUTPUT CALCULATION RESULT — S2807

FIG. 36

| | |
|---|---|
| EXECUTE ESTIMATE MODE | — S2901 |
| ↓ | |
| SELECT ESTIMATE ITEM | — S2902 |
| ↓ | |
| INPUT ESTIMATE VALUE | — S2903 |
| ↓ | |
| REQUEST ESTIMATE | — S2904 |
| ↓ | |
| OUTPUT EXPECTED ESTIMATE LIST | — S2905 |
| ↓ | |
| RECEIVE MARKET SELECTION | — S2906 |
| ↓ | |
| CONNECT TO TOOL MARKET AROUND ME | — S2907 |

FIG. 37

3700

DISPLAY ALARM INFORMATION INDICATING THAT INCLINATION OF LASER RANGE FINDING APPARATUS IS LESS THAN PRESET VALUE WHEN INCLINATION OF LASER RANGE FINDING APPARATUS IS LESS THAN PRESET VALUE ⌐ S3710

DISPLAY USER INTERFACE FOR OPERATION OF LASER RANGE FINDING APPARATUS ⌐ S3720

SELECT ANY ONE OF PLURALITY OF MEASUREMENT MODES INCLUDING ONE-WAY RANGE FINDING MODE, TWO-WAY RANGE FINDING MODE, AREA MEASUREMENT MODE, AND VOLUME MEASUREMENT MODE, AND CALCULATE VALUE ACCORDING TO SELECTED MEASUREMENT MODE BASED ON DISTANCE BETWEEN LASER RANGE FINDING APPARATUS AND AT LEAST ONE OBJECT MEASURED BASED ON TIME AT WHICH OUTPUT LASER BEAM IS RECEIVED OR PHASE THEREOF AND INCLINATION OF LASER RANGE FINDING APPARATUS ACCORDING TO USER INPUT SIGNAL COMMANDING OUTPUT OF LASER BEAM FROM AT LEAST ONE OF FIRST LASER MODULE OR SECOND LASER MODULE INCLUDED IN LASER RANGE FINDING APPARATUS ACCORDING TO SELECTED MEASUREMENT MODE ⌐ S3730

<div align="center">

**INTERNATIONAL SEARCH REPORT**

</div>

| International application No. |
|---|
| **PCT/KR2022/007738** |

**A.    CLASSIFICATION OF SUBJECT MATTER**

**G01S 17/08**(2006.01)i; **G01S 7/48**(2006.01)i; **G01S 7/51**(2006.01)i; **G01S 17/87**(2006.01)i; **G08B 21/18**(2006.01)i; **G01S 7/481**(2006.01)i; **G01B 11/02**(2006.01)i; **H01S 3/00**(2006.01)i

According to International Patent Classification (IPC) or to both national classification and IPC

**B.    FIELDS SEARCHED**

Minimum documentation searched (classification system followed by classification symbols)

G01S 17/08(2006.01); G01B 11/02(2006.01); G01B 11/26(2006.01); G01D 21/02(2006.01); G01S 17/02(2006.01); G01S 7/491(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 레이저(laser), 기울기(slope), 거리(distance), 부피(volume), 디스플레이(display)

**C.    DOCUMENTS CONSIDERED TO BE RELEVANT**

| Category* | Citation of document, with indication, where appropriate, of the relevant passages | Relevant to claim No. |
|---|---|---|
| Y | KR 10-2020-0107138 A (LEE, Si Kyoung et al.) 16 September 2020 (2020-09-16)<br>See paragraphs [0017]-[0033] and [0049]; claims 1 and 9; and figures 1-3. | 1-3 |
| Y | KR 10-2017-0130809 A (CERA CO., LTD.) 29 November 2017 (2017-11-29)<br>See paragraphs [0039]-[0044]; claim 1; and figures 2-4. | 1-3 |
| A | KR 10-2017-0034472 A (SHIN, Ung Chul) 29 March 2017 (2017-03-29)<br>See paragraphs [0033]-[0074]; claims 1-12; and figures 1-4. | 1-3 |
| A | US 2019-0154439 A1 (MAY PATENTS LTD.) 23 May 2019 (2019-05-23)<br>See paragraphs [0812]-[0897]; claims 1-50; and figures 5-15. | 1-3 |
| A | US 2015-0204976 A1 (LEICA GEOSYSTEMS AG) 23 July 2015 (2015-07-23)<br>See paragraphs [0058]-[0081]; claims 16-35; and figures 1-10. | 1-3 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 September 2022** | **27 September 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2022/007738**

| Patent document cited in search report | | | Publication date (day/month/year) | Patent family member(s) | | | Publication date (day/month/year) |
|---|---|---|---|---|---|---|---|
| KR | 10-2020-0107138 | A | 16 September 2020 | None | | | |
| KR | 10-2017-0130809 | A | 29 November 2017 | None | | | |
| KR | 10-2017-0034472 | A | 29 March 2017 | None | | | |
| US | 2019-0154439 | A1 | 23 May 2019 | US | 11255663 | B2 | 22 February 2022 |
| | | | | WO | 2017-149526 | A2 | 08 September 2017 |
| | | | | WO | 2017-149526 | A3 | 05 October 2017 |
| US | 2015-0204976 | A1 | 23 July 2015 | CN | 104508425 | A | 08 April 2015 |
| | | | | CN | 104508425 | B | 29 September 2017 |
| | | | | EP | 2698602 | A1 | 19 February 2014 |
| | | | | EP | 2885608 | A1 | 24 June 2015 |
| | | | | EP | 2885608 | B1 | 31 January 2018 |
| | | | | US | 09753135 | B2 | 05 September 2017 |
| | | | | WO | 2014-027002 | A1 | 20 February 2014 |

Form PCT/ISA/210 (patent family annex) (July 2019)